# EUROPEAN PATENT APPLICATION

(11) **EP 4 654 564 A1**
(43) Date of publication of application: **26.11.2025**
(21) Application number: 23926070.6
(22) Date of filing: 07.12.2023
(51) Int. Cl.: H04M 1/02, H04M 1/18, G06F 1/16

(54) **FOLDABLE DEVICE**

(30) Priority: 03.03.2023 CN 202310239702
(71) Applicant: Honor Device Co., Ltd., Shenzhen, Guangdong 518040 (CN)
(72) Inventor: SUN, Jian, Shenzhen, Guangdong 518040 (CN); WANG, Yuan, Shenzhen, Guangdong 518040 (CN); ZHANG, Liangliang, Shenzhen, Guangdong 518040 (CN); ZHAO, Kuibing, Shenzhen, Guangdong 518040 (CN); LIU, Yang, Shenzhen, Guangdong 518040 (CN)
(74) Representative: MERH-IP Matias Erny Reichl Hoffmann Patentanwälte PartG mbB
(86) International application number: PCT/CN2023/137259
(87) International publication number: WO 2024/183376

(57) **Abstract**

Embodiments of this application provide a foldable device. In the foldable device, an edge of a structural member rotationally connected to a rotating shaft mechanism is provided with a side cover, and an end portion of the rotating shaft mechanism is provided with a shielding assembly. The side cover fits the shielding assembly to cover an edge of a flexible screen. A shape of part of a shielding member of the shielding assembly covered by the side cover is improved, so that the part of the shielding member covered by the side cover is not prone to movement towards an inner side edge of the shielding member, or an interval for the shielding member to move is reserved between the part of the shielding member covered by the side cover and an inner side edge of the side cover, and therefore the shielding member is not prone to disengagement from the inner side edge of the side cover.

## Description

This application claims priority to Chinese Patent Application No. 202310239702.4, entitled "FOLDABLE DEVICE" filed with the China National Intellectual Property Administration on March 3, 2023, which is incorporated herein by reference in its entirety.

### TECHNICAL FIELD

Embodiments of this application relate to the field of electronic device technologies, and in particular, to a foldable device.

### BACKGROUND

With the development of electronic device technologies such as smartphones or tablet computers, electronic devices have more and more functions. If display screens of the electronic devices have larger areas, some functions of the electronic devices provide better use experience. However, when the display screens of the electronic devices have larger areas, overall sizes of the electronic devices may be larger, making it inconvenient to carry the electronic devices. To make it more convenient to carry the electronic devices with display screens having larger areas, in some electronic devices, the display screens may be flexible screens, and the electronic devices may be made into foldable devices.

The foldable devices each may include a flexible screen, a rotating shaft mechanism, and two structural members rotationally connected to the rotating shaft mechanism respectively on two sides of the rotating shaft mechanism. The two structural members are both fixedly connected to the flexible screen. The flexible screen may be driven by the two structural members to be folded and unfolded, so that the foldable device can be switched between a folded state and an unfolded state. To shield edges of the flexible screen, in the related art, the foldable device may further include side covers disposed at edges of the structural members and a shielding assembly disposed on an end portion of the rotating shaft mechanism. Two ends of the shielding assembly are located between the side covers at the two ends and the flexible screen and are covered by the side covers. The side covers fit the shielding assembly to shield the edges of the flexible screen.

However, in the related art, there is a problem that part of the shielding assembly is prone to disengagement from inner side edges of the side cover when the foldable device is switched to the folded state.

### SUMMARY

An embodiment of this application provides a foldable device, in which a shape of part of a shielding member of a shielding assembly covered by a side cover is improved, so that the part of the shielding member covered by the side cover is not prone to movement towards an inner side edge of the shielding member, or an interval for the shielding member to move is reserved between the part of the shielding member covered by the side cover and an inner side edge of the side cover, and therefore the shielding member is not prone to disengagement from the inner side edge of the side cover.

In a first aspect, this application provides a foldable device, including a structural member, a rotating shaft mechanism, a flexible screen, a side cover, and a shielding assembly. The structural member is rotationally connected to the rotating shaft mechanism, and the flexible screen is disposed on surfaces of the structural member and the rotating shaft mechanism. An edge of the structural member is provided with a side cover, the flexible screen is located between the side cover and the structural member, and the side cover covers part of an edge of the flexible screen. An end portion of the rotating shaft mechanism is provided with the shielding assembly. The shielding assembly includes a connecting member and a shielding member. The connecting member is fixedly connected to the end portion of the rotating shaft mechanism, and the shielding member is located on a light exit side of the flexible screen. The shielding member includes a first section and a second section connected to each other. The first section is located between the side cover and the flexible screen, the side cover covers the first section, and the second section is fixedly connected to the connecting member. When the foldable device is in an unfolded state, in an axial direction of the rotating shaft mechanism, a first interval is provided between an inner side edge of the first section and an inner side edge of the side cover. When the foldable device is switched between the unfolded state and a folded state, in the axial direction of the rotating shaft mechanism, the first interval is used to allow the first section to move between the inner side edge of the side cover and an outer side edge of the side cover. The outer side edge of the side cover is a side edge of the side cover facing away from a middle part of the flexible screen in the axial direction of the rotating shaft mechanism, the inner side edge of the side cover is a side edge of the side cover facing the middle part of the flexible screen in the axial direction of the rotating shaft mechanism, and the inner side edge of the first section is a side edge of the first section facing the middle part of the flexible screen in the axial direction of the rotating shaft mechanism.

According to the foldable device in this embodiment of this application, the first interval is reserved between the inner side edge of the first section and the inner side edge of the side cover, and the first interval may allow the first section to move when the shielding member is bent, so that when the foldable device is switched to the folded state, the part of the shielding member covered by the side cover moves towards the inner side edge of the shielding member, the first section is not prone to disengagement from the inner side edge of the side cover, either, and the shielding member does not easily affect an appearance of the whole machine. In addition, since the first section is not prone to disengagement from the inner side edge of the side cover, the first section is not prone to warping due to release from covering pressure of the side cover. When the foldable device is unfolded to restore the shielding member to an unfolded state, the first section may move towards the outer side edge of the side cover. During the movement of the first section towards the outer side edge of the side cover, it is not easy to cause damage to the shielding member caused by abutment of the first section against the inner side edge of the side cover due to warping. Moreover, since the first interval is reserved between the inner side edge of the first section and the inner side edge of the side cover, the first section may be allowed to move towards the inner side edge of the shielding member by a certain distance, and when the shielding member has a smaller thickness and lower strength, the first section is not prone to disengagement from the inner side edge of the side cover, either. In this way, the shielding member can be made thinner, and the first section cannot be prone to disengagement from the inner side edge of the side cover.

In a possible implementation, two sides of the rotating shaft mechanism are rotationally connected to structural members, the flexible screen is disposed on surfaces of the rotating shaft mechanism and the two structural members, an edge of either of the structural members is provided with the side cover, and two ends of the second section are both provided with the first section. On either of the two sides of the rotating shaft mechanism: the flexible screen is located between the side cover and the structural member, the side cover covers part of the edge of the flexible screen, the first section is located between the side cover and the flexible screen, and the side cover covers the first section; when the foldable device is in the unfolded state, in the axial direction of the rotating shaft mechanism, the first interval is provided between the inner side edge of the first section and the inner side edge of the side cover; and when the foldable device is switched between the unfolded state and the folded state, in the axial direction of the rotating shaft mechanism, the first interval is used to allow the first section to move between the inner side edge of the side cover and the outer side edge of the side cover.

In a possible implementation, on either of the two sides of the rotating shaft mechanism: when the foldable device is in the unfolded state, in the axial direction of the rotating shaft mechanism, a distance between the inner side edge of the first section and the outer side edge of the side cover is smaller than a distance between the inner side edge of the second section and the outer side edge of the side cover. The inner side edge of the second section is a side edge of the second section facing the middle part of the flexible screen in the axial direction of the rotating shaft mechanism.

In a possible implementation, when the foldable device is in the unfolded state, in the axial direction of the rotating shaft mechanism, the inner side edge of the second section protrudes from the inner side edge of the first section.

In a possible implementation, on either of the two sides of the rotating shaft mechanism: the shielding member further includes a third section between the first section and the second section, the third section being located between the side cover and the flexible screen, and the side cover covers the third section; when the foldable device is in the unfolded state, in the axial direction of the rotating shaft mechanism, a second interval is provided between an inner side edge of the third section and the inner side edge of the side cover, the second interval being smaller than the first interval; and when the foldable device is switched between the unfolded state and the folded state, in the axial direction of the rotating shaft mechanism, the second interval is used to allow the third section to move between the inner side edge of the side cover and the outer side edge of the side cover. The inner side edge of the third section is a side edge of the third section facing the middle part of the flexible screen in the axial direction of the rotating shaft mechanism.

In a possible implementation, on either of the two sides of the rotating shaft mechanism: when the foldable device is in the unfolded state, in the axial direction of the rotating shaft mechanism, the distance between the inner side edge of the first section and the outer side edge of the side cover is smaller than a distance between the inner side edge of the third section and the outer side edge of the side cover, and the distance between the inner side edge of the third section and the outer side edge of the side cover is smaller than the distance between the inner side edge of the second section and the outer side edge of the side cover.

In a possible implementation, when the foldable device is in the unfolded state, in the axial direction of the rotating shaft mechanism, the inner side edge of the third section protrudes from the inner side edge of the first section, and the inner side edge of the second section protrudes from the inner side edge of the third section.

In a possible implementation, on either of the two sides of the rotating shaft mechanism: the shielding member further includes a first connecting section connecting the first section and the third section, and the inner side edge of the first section is transitionally connected to the inner side edge of the third section through an inner side edge of the first connecting section. The inner side edge of the first connecting section is a side edge of the first connecting section facing the middle part of the flexible screen in the axial direction of the rotating shaft mechanism.

In a possible implementation, on either of the two sides of the rotating shaft mechanism: the shielding member further includes a fourth section between the first section and the second section, in the axial direction of the rotating shaft mechanism, the fourth section being located between the inner side edge of the side cover and the outer side edge of the side cover; when the foldable device is in the unfolded state, the fourth section is located outside the side cover, and in the axial direction of the rotating shaft mechanism, a third interval is provided between an inner side edge of the fourth section and the inner side edge of the side cover, the third interval being smaller than the first interval; when the foldable device is in the folded state, at least part of the fourth section is covered by the side cover; and when the foldable device is switched between the unfolded state and the folded state, in the axial direction of the rotating shaft mechanism, the third interval is used to allow the part of the fourth section covered by the side cover when the foldable device is in the folded state to move between the inner side edge of the side cover and the outer side edge of the side cover. The inner side edge of the fourth section is a side edge of the fourth section facing the middle part of the flexible screen in the axial direction of the rotating shaft mechanism.

In a possible implementation, on either of the two sides of the rotating shaft mechanism: when the foldable device is in the unfolded state, in the axial direction of the rotating shaft mechanism, the distance between the inner side edge of the first section and the outer side edge of the side cover is smaller than a distance between the inner side edge of the fourth section and the outer side edge of the side cover, and the distance between the inner side edge of the fourth section and the outer side edge of the side cover is smaller than the distance between the inner side edge of the second section and the outer side edge of the side cover.

In a possible implementation, when the foldable device is in the unfolded state, in the axial direction of the rotating shaft mechanism, the inner side edge of the fourth section protrudes from the inner side edge of the first section, and the inner side edge of the second section protrudes from the inner side edge of the fourth section.

In a possible implementation, on either of the two sides of the rotating shaft mechanism: the fourth section is located between the second section and the third section, and the third section joins the fourth section; and when the foldable device is in the unfolded state, in the axial direction of the rotating shaft mechanism, the inner side edge of the fourth section is flush with the inner side edge of the third section.

In a possible implementation, on either of the two sides of the rotating shaft mechanism: when the foldable device is in the unfolded state, the third interval is equal to the second interval.

In a possible implementation, on either of the two sides of the rotating shaft mechanism: the shielding member further includes a second connecting section connecting the second section and the fourth section, and the inner side edge of the second section is transitionally connected to the inner side edge of the fourth section through an inner side edge of the second connecting section. The inner side edge of the second connecting section is a side edge of the second connecting section facing the middle part of the flexible screen in the axial direction of the rotating shaft mechanism.

In a possible implementation, the shielding member has a limiting structure. On either of the two sides of the rotating shaft mechanism: the shielding member is configured to abut against at least one of the side cover and the flexible screen through the limiting structure, to restrict part of the shielding member covered by the side cover when the foldable device is in the folded state from moving towards an inner side edge of the shielding member. The inner side edge of the shielding member is a side edge of the shielding member facing the middle part of the flexible screen in the axial direction of the rotating shaft mechanism.

In a possible implementation, on either of the two sides of the rotating shaft mechanism: the limiting structure includes a limiting hole provided on a side of the shielding member facing away from the flexible screen, and the side cover has a limiting post protruding towards a light-emitting surface of the flexible screen, the limiting post being disposed through the limiting hole, a hole wall of the limiting hole being configured to abut against the limiting post to restrict the part of the shielding member covered by the side cover when the foldable device is in the folded state from moving towards the inner side edge of the shielding member.

In a possible implementation, the limiting hole is a strip-shaped hole, and when the foldable device is in the unfolded state, an extension direction of the limiting hole is perpendicular to the axial direction of the rotating shaft mechanism. On either of the two sides of the rotating shaft mechanism: the limiting post is in sliding fit with the limiting hole, and the limiting post is slidable relative to the shielding member along the extension direction of the limiting hole.

In a possible implementation, the limiting hole is a through hole. On either of the two sides of the rotating shaft mechanism: in the axial direction of the rotating shaft mechanism, a fourth interval is provided between the flexible screen and the structural member, and the limiting post is located within the fourth interval.

In a possible implementation, on either of the two sides of the rotating shaft mechanism: the limiting structure includes a first protruding portion located on the side of the shielding member facing away from the flexible screen, the first protruding portion being configured to abut against the side cover to restrict the part of the shielding member covered by the side cover when the foldable device is in the folded state from moving towards the inner side edge of the shielding member.

In a possible implementation, a side of the side cover facing the light-emitting surface of the flexible screen is provided with a sliding groove, and an extension direction of the sliding groove is perpendicular to the axial direction of the rotating shaft mechanism. On either of the two sides of the rotating shaft mechanism: the first protruding portion is slidably assembled in the sliding groove, the first protruding portion is slidable relative to the side cover along the extension direction of the sliding groove, and the first protruding portion is configured to abut against a groove wall of the sliding groove to restrict the part of the shielding member covered by the side cover when the foldable device is in the folded state from moving towards the inner side edge of the shielding member.

In a possible implementation, on either of the two sides of the rotating shaft mechanism: the limiting structure includes a second protruding portion located on a side of the shielding member facing the flexible screen; in the axial direction of the rotating shaft mechanism, the second protruding portion being located between the flexible screen and the side cover, and the second protruding portion being configured to abut against the flexible screen to restrict the part of the shielding member covered by the side cover when the foldable device is in the folded state from moving towards the inner side edge of the shielding member.

In a possible implementation, a thickness of the second section is greater than that of the first section.

In a possible implementation, a middle part of the second section is fixedly connected to the connecting member, and the thickness of the second section gradually decreases from the middle part towards an end portion of the first section.

In a second aspect, this application provides another foldable device, including a structural member, a rotating shaft mechanism, a flexible screen, a side cover, and a shielding assembly. The structural member is rotationally connected to the rotating shaft mechanism, and the flexible screen is disposed on surfaces of the structural member and the rotating shaft mechanism. An edge of the structural member is provided with a side cover, the flexible screen is located between the side cover and the structural member, and the side cover covers part of an edge of the flexible screen. An end portion of the rotating shaft mechanism is provided with the shielding assembly. The shielding assembly includes a connecting member and a shielding member. The connecting member is fixedly connected to the end portion of the rotating shaft mechanism, and the shielding member is located on a light exit side of the flexible screen. The shielding member includes a first section and a second section connected to each other. The first section is located between the side cover and the flexible screen, the side cover covers the first section, and the second section is fixedly connected to the connecting member. The shielding member has a limiting structure. The shielding member is configured to abut against at least one of the side cover and the flexible screen through the limiting structure, to restrict part of the shielding member covered by the side cover when the foldable device is in the folded state from moving towards an inner side edge of the shielding member. The inner side edge of the shielding member is a side edge of the shielding member facing the middle part of the flexible screen in the axial direction of the rotating shaft mechanism.

According to the foldable device in this embodiment of this application, the limiting structure can restrict the part of the shielding member covered by the side cover when the foldable device is in the folded state from moving towards the inner side edge of the shielding member, so that when the foldable device is switched to the folded state, the part of the shielding member covered by the side cover when the foldable device is in the folded state is not prone to movement towards the inner side edge of the shielding member, the part of the shielding member covered by the side cover when the foldable device is in the folded state is not prone to disengagement from the inner side edge of the side cover, and the shielding member does not easily affect the appearance of the whole machine. In addition, since the part of the shielding member covered by the side cover when the foldable device is in the folded state is not prone to disengagement from the inner side edge of the side cover, the part of the shielding member covered by the side cover when the foldable device is in the folded state is not prone to warping due to release from covering pressure of the side cover. When the foldable device is unfolded to restore the shielding member to an unfolded state, the part of the shielding member covered by the side cover when the foldable device is in the folded state may move towards the outer side edge of the side cover. During the movement of the part of the shielding member covered by the side cover when the foldable device is in the folded state towards the outer side edge of the side cover, it is not easy to cause damage to the shielding member caused by abutment of a partial position of the shielding member against the inner side edge of the side cover due to warping. Moreover, due to the restriction of the limiting structure, when the shielding member has a smaller thickness and lower strength, the part of the shielding member covered by the side cover when the foldable device is in the folded state is not prone to movement towards the inner side edge of the shielding member, either, and the part of the shielding member covered by the side cover when the foldable device is in the folded state is not prone to disengagement from the inner side edge of the side cover. In this way, the shielding member can be made thinner, and the part of the shielding member covered by the side cover when the foldable device is in the folded state cannot be prone to disengagement from the inner side edge of the side cover.

In a third aspect, this application provides another foldable device, including a structural member, a rotating shaft mechanism, a flexible screen, a side cover, and a shielding assembly. The structural member is rotationally connected to the rotating shaft mechanism, and the flexible screen is disposed on surfaces of the structural member and the rotating shaft mechanism. An edge of the structural member is provided with a side cover, the flexible screen is located between the side cover and the structural member, and the side cover covers part of an edge of the flexible screen. An end portion of the rotating shaft mechanism is provided with the shielding assembly. The shielding assembly includes a connecting member and a shielding member. The connecting member is fixedly connected to the end portion of the rotating shaft mechanism, and the shielding member is located on a light exit side of the flexible screen. The shielding member includes a first section and a second section connected to each other. The first section is located between the side cover and the flexible screen, the side cover covers the first section, and the second section is fixedly connected to the connecting member. A thickness of the second section is greater than that of the first section.

According to the foldable device in this embodiment of this application, the thickness of the second section is larger, which may make the strength of the shielding member greater, so that when the foldable device is switched to the folded state, two ends of the shielding member are not prone to movement towards the inner side edge of the shielding member, the part of the shielding member covered by the side cover when the foldable device is in the folded state is not prone to disengagement from the inner side edge of the side cover, and the shielding member does not easily affect the appearance of the whole machine. In addition, since the part of the shielding member covered by the side cover when the foldable device is in the folded state is not prone to disengagement from the inner side edge of the side cover, the part of the shielding member covered by the side cover when the foldable device is in the folded state is not prone to warping due to release from covering pressure of the side cover. When the foldable device is unfolded to restore the shielding member to an unfolded state, the part of the shielding member covered by the side cover when the foldable device is in the folded state may move towards the outer side edge of the side cover. During the movement of the part of the shielding member covered by the side cover when the foldable device is in the folded state towards the outer side edge of the side cover, it is not easy to cause damage to the shielding member caused by abutment of a partial position of the shielding member against the inner side edge of the side cover due to warping. Moreover, after the strength of the shielding member is improved by thickening a thickness of the part of the shielding member configured to be connected to the connecting member, when the thickness of the part of the shielding member covered by the side cover when the foldable device is in the folded state is smaller, the part of the shielding member covered by the side cover when the foldable device is in the folded state is not prone to movement towards the inner side edge of the shielding member, either, and the part of the shielding member covered by the side cover when the foldable device is in the folded state is not prone to disengagement from the inner side edge of the side cover. In this way, the part of the shielding member covered by the side cover when the foldable device is in the folded state can be made thinner, and the part of the shielding member covered by the side cover when the foldable device is in the folded state cannot be prone to disengagement from the inner side edge of the side cover.

### BRIEF DESCRIPTION OF DRAWINGS

FIG. 1 is a schematic diagram of a foldable device in a folded state according to an embodiment of this application;
FIG. 2 is a schematic diagram of another foldable device in an unfolded state from one perspective according to an embodiment of this application;
FIG. 3 is an enlarged view of Part A in FIG. 2;
FIG. 4 is a schematic diagram of another foldable device in an unfolded state from another perspective according to an embodiment of this application;
FIG. 5 is an enlarged view of Part B in FIG. 4;
FIG. 6 is a schematic diagram of a shielding assembly on a rotating shaft mechanism between a first structural member and a second structural member when another foldable device is in an unfolded state according to an embodiment of this application;
FIG. 7 is a schematic diagram of a shielding assembly of another foldable device according to an embodiment of this application;
FIG. 8 is a schematic diagram of assembly of part of a shielding member of another foldable device between a side cover and a flexible screen according to an embodiment of this application;
FIG. 9 is a schematic diagram of local openings in a first side cover and a second side cover when another foldable device is in an unfolded state according to an embodiment of this application;
FIG. 10 is a schematic diagram of fit between a first side cover, a second side cover, and a covering assembly when another foldable device is in an unfolded state according to an embodiment of this application;
FIG. 11 is a schematic diagram of local openings on sides of a first structural member and a second structural member facing away from a flexible screen when another foldable device is in an unfolded state according to an embodiment of this application;
FIG. 12 is a schematic diagram of a shielding assembly of another foldable device according to an embodiment of this application;
FIG. 13 is a schematic diagram of local openings in a first side cover and a second side cover when another foldable device is in an unfolded state according to an embodiment of this application;
FIG. 14 is a schematic diagram of fit between a first side cover, a second side cover, and a covering assembly when another foldable device is in an unfolded state according to an embodiment of this application;
FIG. 15 is a schematic diagram of local openings in a first side cover and a second side cover when another foldable device is in an unfolded state according to an embodiment of this application;
FIG. 16 is a schematic diagram of fit between a first side cover, a second side cover, and a covering assembly when another foldable device is in an unfolded state according to an embodiment of this application;
FIG. 17 is a schematic diagram of local openings on sides of a first structural member and a second structural member facing away from a flexible screen when another foldable device is in an unfolded state according to an embodiment of this application;
FIG. 18 is a schematic diagram of assembly of part of a shielding member of another foldable device between a side cover and a flexible screen according to an embodiment of this application;
FIG. 19 is a schematic diagram of assembly of part of a shielding member of another foldable device between a side cover and a flexible screen according to an embodiment of this application;
FIG. 20 is a schematic diagram of assembly of part of a shielding member of another foldable device between a side cover and a flexible screen according to an embodiment of this application;
FIG. 21 is a schematic diagram of a shielding assembly on a rotating shaft mechanism between a first structural member and a second structural member when another foldable device is in an unfolded state according to an embodiment of this application;
FIG. 22 is a schematic diagram of assembly of part of a shielding member of another foldable device between a side cover and a flexible screen according to an embodiment of this application;
FIG. 23 is a schematic diagram of local openings on sides of a first structural member and a second structural member facing away from a flexible screen when another foldable device is in an unfolded state according to an embodiment of this application;
FIG. 24 is a schematic diagram of fit between a first side cover, a second side cover, and a covering assembly when another foldable device is in an unfolded state according to an embodiment of this application; and
FIG. 25 is a schematic diagram of fit between a first side cover, a second side cover, and a covering assembly when another foldable device is in an unfolded state according to an embodiment of this application.

Description of reference numerals in the accompanying drawings:
100. rotating shaft mechanism;
200. structural member; 210. first structural member; 220. second structural member;
300. flexible screen; 310. connecting region; 311. first region; 312. second region; 320. bendable region; 321. first sub-region; 322. second sub-region; 323. third sub-region;
400. shielding assembly;
410. connecting member; 411. connecting portion; 412. fixed portion;
420. shielding member; 421. first section; 422. second section; 423. third section; 424. fourth section; 425. first connecting section; 426. second connecting section; 427. limiting hole; 428. first protruding portion; 429. second protruding portion;
430. inner side edge of shielding member; 431. inner side edge of first section; 432. inner side edge of second section; 433. inner side edge of third section; 434. inner side edge of fourth section; 435. inner side edge of first connecting section; 436. inner side edge of second connecting section;
440. outer side edge of shielding member;
500. side cover; 510. first side cover; 520. second side cover; 530. limiting post; 540. sliding groove; 550. inner side edge of side cover; 551. inner side edge of first side cover; 552. inner side edge of second side cover; 560. outer side edge of side cover; 561. outer side edge of first side cover; 562. outer side edge of second side cover;
L1. first interval; L2. second interval; L3. third interval; L4. fourth interval.

### DESCRIPTION OF EMBODIMENTS

Terms used in implementations of this application are only used for explaining specific embodiments of this application, but are not intended to limit this application. Implementations of the embodiments of this application are described in detail below with reference to the accompanying drawings.

The embodiments of this application provide a foldable device, which may change its own shape by folding and unfolding, to meet requirements of users in different scenarios. For example, folding may be performed in the case of carrying, to reduce a size of the foldable device. In use, unfolding may be performed, to increase a size of a screen for display or operation. It may be understood that the foldable device may also be referred to as user equipment (user equipment, UE), a terminal (terminal), or the like.

The foldable device according to the embodiments of this application may include, but is not limited to, a mobile terminal or a fixed terminal, such as a tablet computer (portable android device, PAD), a personal digital assistant (personal digital assistant, PDA), a handheld device having a wireless communication function, a computing device, an on-board device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in smart city (smart city), or a wireless terminal in smart home (smart home). In this embodiment of this application, a description is provided by taking a handheld device having a wireless communication function as an example. The handheld device having the wireless communication function may be a mobile phone.

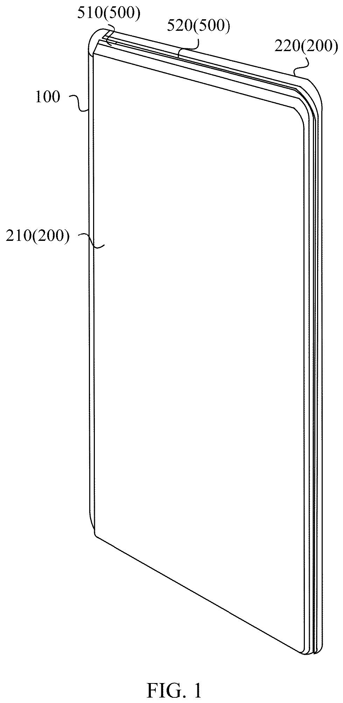

FIG. 1 is a schematic diagram of a foldable device in a folded state according to an embodiment of this application.

As shown in FIG. 1, in this embodiment of this application, the foldable device includes a support assembly, the support assembly includes at least two structural members 200 and a rotating shaft mechanism 100 located between two adjacent structural members 200, the structural members 200 are rotationally connected to the adjacent rotating shaft mechanism 100, and the two adjacent structural members 200 are rotationally connected through the rotating shaft mechanism 100 therebetween, so that the foldable device can be switched between an unfolded state and a folded state.

It may be understood that when the two structural members 200 on two sides of the rotating shaft mechanism 100 rotate to be stacked on each other, the foldable device is in the folded state. In this case, the two structural members 200 on the two sides of the rotating shaft mechanism 100 may be parallel to each other. A person skilled in the art may understand that "parallel to each other" as referred to in the document of this application may not mean being absolutely parallel due to reasons such as design tolerances, which allows a slight deviation.

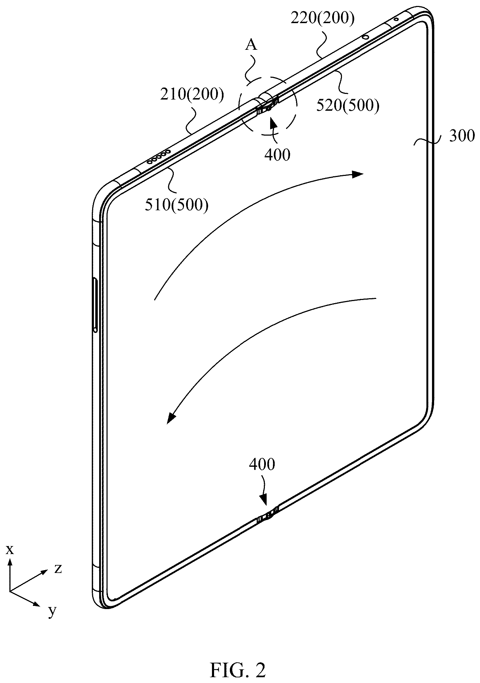

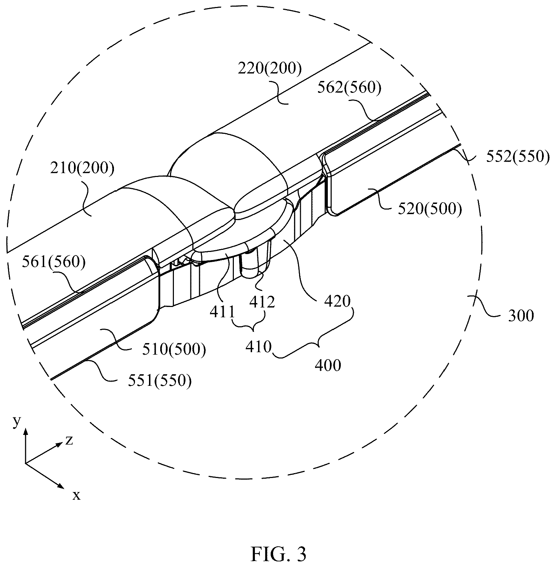

FIG. 2 is a schematic diagram of another foldable device in an unfolded state from one perspective according to an embodiment of this application. FIG. 3 is an enlarged view of Part A in FIG. 2. In the figures, a direction x is an axial direction of the rotating shaft mechanism 100, a direction y is a thickness direction of the foldable device when the foldable device is in the unfolded state, a direction z is an arrangement direction of the structural members 200 when the foldable device is in the unfolded state, the direction x may be perpendicular to the direction y, the direction x may be perpendicular to the direction z, and the direction y may be perpendicular to the direction z.

As shown in FIG. 2 and FIG. 3, when the two structural members 200 on the two sides of the rotating shaft mechanism 100 rotate relative to each other until an angle therebetween is approximately 180°, the foldable device is in the unfolded state. A person skilled in the art may understand that "an angle is approximately 180°" as referred to in the document of this application may not mean being absolutely 180° due to reasons such as design tolerances, which allows a slight deviation, such as 165°, 177°, or 185°.

Certainly, the foldable device further has an intermediate state during the switching between the folded state and the unfolded state.

It may be understood that the axial direction of the rotating shaft mechanism 100 may be a length direction of the foldable device in the unfolded state. In this case, the direction z may be a width direction of the foldable device in the unfolded state. The axial direction of the rotating shaft mechanism 100 may alternatively be the width direction of the foldable device in the unfolded state. In this case, the direction z may be the length direction of the foldable device in the unfolded state.

It may be understood that the support assembly may include two structural members 200 or include three, four, or more structural members 200, and two adjacent structural members 200 are rotationally connected through the rotating shaft mechanism 100. Correspondingly, the foldable device may be folded into two, three, four, or more layers.

It may be understood that when the support assembly includes three or more structural members 200, the support assembly may also have a partially folded state. When the support assembly is in the partially folded state, the structural members 200 on two sides of part of the rotating shaft mechanisms 100 rotate relative to each other until an angle therebetween is approximately 180°, and the structural members 200 on two sides of part of the rotating shaft mechanisms 100 rotate to be stacked on each other.

Exemplarily, the support assembly may include one rotating shaft mechanism 100 and two structural members 200, the two structural members 200 are disposed on two sides of the rotating shaft mechanism 100 respectively, and the two structural members 200 may rotate towards each other to form a stack and rotate away from each other until an angle is approximately 180°. In this case, the foldable device may be folded into two layers.

Exemplarily, the support assembly may include three structural members 200 arranged side by side, a rotating shaft mechanism 100 is disposed between two adjacent structural members 200, and the two adjacent structural members 200 are rotationally connected through the rotating shaft mechanism 100 therebetween. Two structural members 200 on two sides may rotate towards each other relative to the middle structural member 200 to be stacked, so that the foldable device can form a three-layer stack or a two-layer stack folded state in which the two structural members 200 on the two sides are located on a same layer. The two structural members 200 on the two sides may rotate away from each other relative to the structural member 200 in the middle to be at an angle of approximately 180° with the structural member 200 in the middle, so that the foldable device can be switched to the unfolded state. One of the two structural members 200 on the two sides may rotate towards and relative to the structural member 200 in the middle to be stacked, the other of the two structural members 200 on the two sides may rotate away from and relative to the structural member 200 in the middle to be at an angle of approximately 180° with the structural member 200 in the middle, so that the foldable device can be switched to the partially folded state.

In this embodiment of this application, the foldable device further includes a flexible screen 300, and the flexible screen 300 is disposed on the support assembly. Specifically, the flexible screen 300 is disposed on surfaces of the structural member 200 and the rotating shaft mechanism 100, a part of the flexible screen 300 opposite to the structural member 200 may be connected to the opposite structural member 200, and the rotating shaft mechanism 100 may be configured to support the flexible screen 300.

It may be understood that the flexible screen 300 is disposed on a surface on a same side of all the structural members 200 and all the rotating shaft mechanisms 100.

It may be understood that the part of the flexible screen 300 opposite to the structural member 200 may be fixedly connected to the structural member 200 opposite thereto, and the part of the flexible screen 300 opposite to the structural member 200 may alternatively be slidably connected to the structural member 200 opposite thereto.

It may be understood that the flexible screen 300 may be configured for image display or may serve as a virtual keyboard to input information, and a function of the flexible screen 300 may be determined according to a specific application scenario.

It may be understood that a length direction of the flexible screen 300 is the same as the length direction of the foldable device, a width direction of the flexible screen 300 is the same as the width direction of the foldable device, and a thickness direction of the flexible screen 300 is the same as the thickness direction of the foldable device.

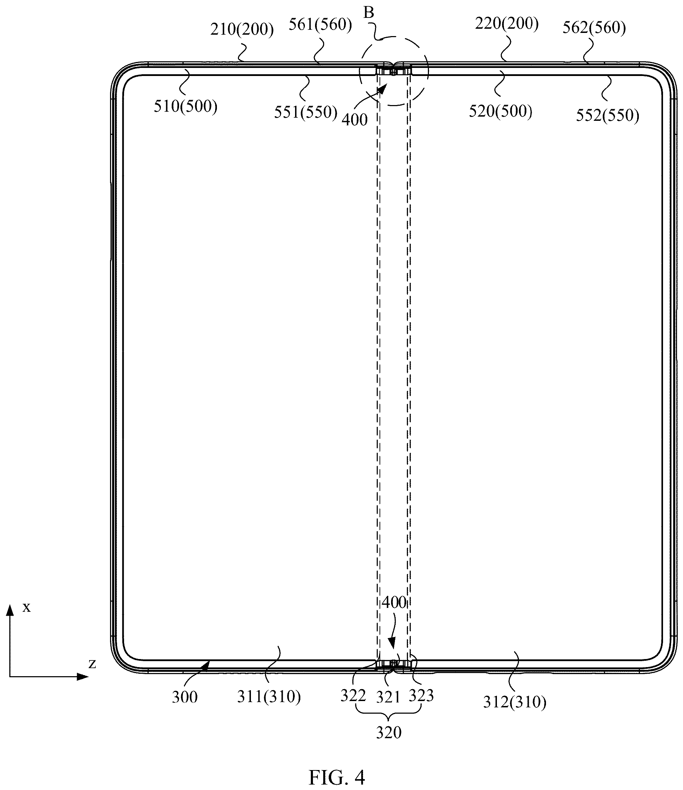

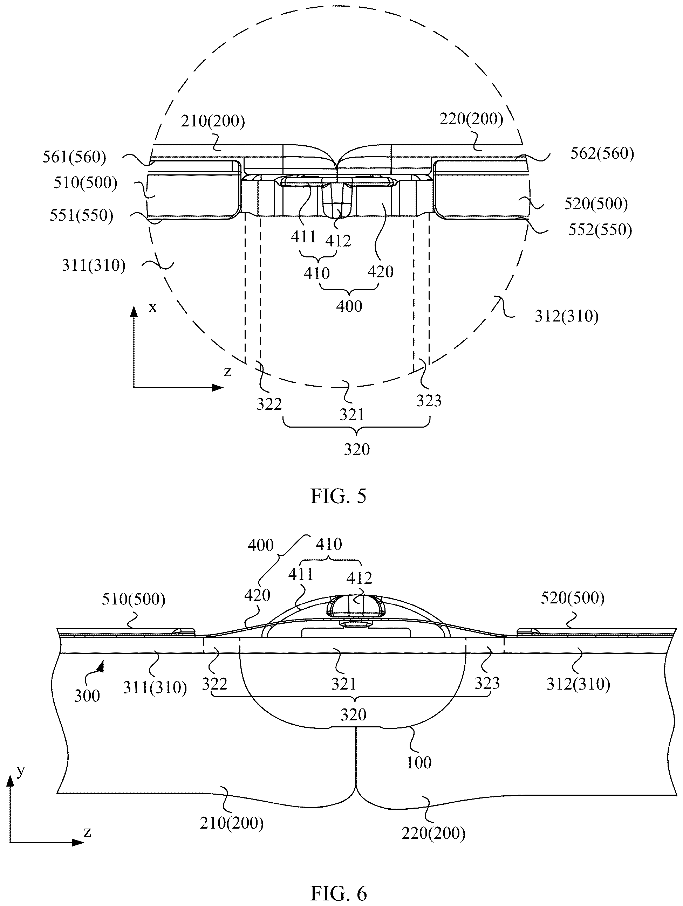

FIG. 4 is a schematic diagram of another foldable device in an unfolded state from another perspective according to an embodiment of this application. FIG. 5 is an enlarged view of Part B in FIG. 4.

As shown in FIG. 4 and FIG. 5 and referring to FIG. 2 and FIG. 3 together, in this embodiment of this application, the flexible screen 300 may include at least two connecting regions 310 one-to-one opposite to the structural members 200 and a bendable region 320 located between two adjacent connecting regions 310, the two adjacent connecting regions 310 are connected through the bendable region 320, the connecting region 310 is located on a surface of the structural member opposite thereto, and the connecting region 310 is connected to the structural member 200 opposite thereto.

It may be understood that when the foldable device is switched between the unfolded state and the folded state, the connecting region 310 rotates with the structural member 200 connected thereto, so that the bendable region 320 is deformed. Specifically, when the foldable device is switched from the unfolded state to the folded state, the bendable region 320 is driven by the connecting regions 310 on two sides thereof to bend, the connecting regions 310 connected to the two sides of the bendable region 320 may be parallel to each other, and the bendable region 320 may have a drop-shaped structure. When the foldable device is switched from the folded state to the unfolded state, the bendable region 320 is driven by the connecting regions 310 on the two sides thereof to be unfolded, and the bendable region 320 may be coplanar with the connecting regions 310 connected to the two sides thereof (a slight deviation is allowed).

It may be understood that the connecting region 310 may be fixedly connected to the structural member 200 opposite thereto by bonding, clamping, or the like.

It may be understood that the bendable region 320 may include a first sub-region 321 opposite to the rotating shaft mechanism 100 and a second sub-region 322 and a third sub-region 323 that are located on two sides of the first sub-region 321 respectively. In a same bendable region 320, one side of the first sub-region 321 is connected to the connecting region 310 adjacent thereto through the second sub-region 322, the other side of the first sub-region 321 is connected to the connecting region 310 adjacent thereto through the third sub-region 323, and during the switching of the foldable device to the folded state, the first sub-region 321, the second sub-region 322, and the third sub-region 323 may all be bent.

Two structural members 200 located on two sides of one rotating shaft mechanism 100 are called a first structural member 210 and a second structural member 220 respectively, the connecting region 310 opposite to the first structural member 210 is called a first region 311, and the connecting region 310 opposite to the second structural member 220 is called a second region 312. The first structural member 210 and the second structural member 220 are both rotationally connected to the rotating shaft mechanism 100 therebetween, the first region 311 is located on a surface of the first structural member 210 and is connected to the first structural member 210, the second region 312 is located on a surface of the second structural member 220 and is connected to the second structural member 220, the first sub-region 321 of the bendable region 320 located between the first region 311 and the second region 312 is opposite to the rotating shaft mechanism 100 located between the first structural member 210 and the second structural member 220, one side of the first sub-region 321 is connected to the first region 311 through the second sub-region 322, and the other side of the first sub-region 321 is connected to the second region 312 through the third sub-region 323.

It may be understood that the support assembly may include one rotating shaft mechanism 100 or a plurality of rotating shaft mechanisms 100 parallel to each other. When the support assembly includes two or more rotating shaft mechanisms 100, in addition to the first structural member 210 and the second structural member 220, the support assembly may also include another structural member 200. In addition to the first region 311 and the second region 312, the flexible screen 300 may also include another connecting region 310.

In this embodiment of this application, the structural member 200 may include a middle frame (not shown) and a back cover (not shown). In a same structural member 200, one side of the middle frame in a thickness direction thereof is fixedly connected to the back cover, and the other side of the middle frame in the thickness direction thereof is used to be fixedly connected to a portion opposite to the flexible screen 300.

It may be understood that the thickness direction of the middle frame is the same as the thickness direction of the foldable device.

It may be understood that the middle frame may be fixedly connected to the flexible screen 300 by bonding, clamping, or the like.

It may be understood that in an embodiment where the structural member 200 includes middle frames and back covers, the middle frames are mounted on the rotating shaft mechanism 100, and the middle frames on two sides of the rotating shaft mechanism 100 are rotationally connected through the rotating shaft mechanism 100. When the foldable device is in the unfolded state, the middle frames on the two sides of the rotating shaft mechanism 100 are at an angle of approximately 180°, and the back covers on the two sides of the rotating shaft mechanism 100 are at an angle of approximately 180°. When the foldable device is in the folded state, the middle frames on the two sides of the rotating shaft mechanism 100 may be parallel to each other, the back covers on the two sides of the rotating shaft mechanism 100 may be parallel to each other, and the middle frames on the two sides of the rotating shaft mechanism 100 are sandwiched between the back covers fixedly connected thereto.

It may be understood that the first structural member 210 may include a first middle frame (not shown) and a first back cover (not shown). One side of the first middle frame in a thickness direction thereof is fixedly connected to the first back cover. The first region 311 is opposite to the other side of the first middle frame in the thickness direction thereof and is connected to the first middle frame. The second structural member 220 may include a second middle frame (not shown) and a second back cover (not shown). One side of the second middle frame in a thickness direction thereof is fixedly connected to the second back cover. The second region 312 is opposite to the other side of the second middle frame in the thickness direction thereof and is connected to the second middle frame.

In this embodiment of this application, the foldable device may further include a side cover 500 disposed on an edge of the structural member 200 and a shielding assembly 400 disposed on an end portion of the rotating shaft mechanism 100, the flexible screen 300 is located between the side cover 500 and the structural member 200, and the flexible screen 300 is located between the shielding member 400 and the structural member 200. The side cover 500 and the shielding assembly 400 cover part of an edge of the flexible screen 300 respectively, and the side cover 500 and the shielding assembly 400 fit to cover the edge of the flexible screen 300. Specifically, the connecting region 310 is located between the structural member 200 at a location thereof and the side cover 500, the side cover 500 may cover at least part of an edge of the connecting region 310 on a surface of the structural member 200 where the side cover 500 is located, and the shielding assembly 400 is configured to shield a part of the edge of the flexible screen 300 that is not shielded by the side cover 500. In this way, exposure of the edge of the flexible screen 300 can be prevented, so that an appearance effect of the foldable device can be improved, the edge of the flexible screen 300 can be less susceptible to damage due to collisions or the like, and foreign objects may be less likely to enter a gap between the flexible screen 300 and the structural member 200.

It may be understood that two axial ends of the rotating shaft mechanism 100 may be both provided with the shielding assembly 400.

It may be understood that in an embodiment where the structural member 200 includes a middle frame, the side cover 500 may be fixedly connected to a side of the middle frame facing the flexible screen 300.

It may be understood that a part of the connecting region 310 connected to the bendable region 320 may be located outside the side cover 500, the side cover 500 may cover part of the edge of the connecting region 310 on the surface of the structural member 200 where the side cover 500 is located, and a part of the connecting region 310 connected to the bendable region 320 may be covered by the shielding assembly 400. Alternatively, the part of the connecting region 310 connected to the bendable region 320 may be covered by the side cover 500, and the edge of the connecting region 310 may be entirely covered by the side cover 500.

The following description is provided by taking the first structural member 210 , the second structural member 220, and a structure of the rotating shaft mechanism 100 between the first structural member 210 and the second structural member 220 as an example. When the support assembly includes three or more structural members 200, a structure of the rotating shaft mechanism 100 at another position may be set by reference.

The side cover 500 disposed on an edge of the first structural member 210 is called a first side cover 510, the side cover 500 disposed on an edge of the second structural member 220 is called a second side cover 520, the first region 311 is located between the first structural member 210 and the first side cover 510, the first side cover 510 covers at least part of an edge of the first region 311, the second region 312 is located between the second structural member 220 and the second side cover 520, and the second side cover 520 covers at least part of an edge of the second region 312.

It may be understood that the edge of the first region 311 may be entirely covered by the first side cover 510 or may be partially covered by the first side cover 510 and partially covered by the shielding assembly 400. The edge of the second region 312 may be entirely covered by the second side cover 520 or may be partially covered by the second side cover 520 and partially covered by the shielding assembly 400.

It may be understood that an outer side edge 560 of the side cover may be fixedly connected to the edge of the structural member 200 by snap connection, bonding, fastener connection, welding, or the like, and an inner side edge 550 of the side cover is located on a light exit side of the flexible screen 300.

Specifically, an outer side edge 561 of the first side cover may be fixedly connected to the edge of the first structural member 210 by snap connection, bonding, fastener connection, welding, or the like, an inner side edge 551 of the first side cover is located on a light exit side of the first region 311, and a projection thereof in the thickness direction of the foldable device is within the flexible screen 300. An outer side edge 562 of the second side cover may be fixedly connected to the edge of the second structural member 220 by snap connection, bonding, fastener connection, welding, or the like, an inner side edge 552 of the second side cover is located on a light exit side of the second region 312, and a projection thereof in the thickness direction of the foldable device is within the flexible screen 300..

It may be understood that a side of the flexible screen 300 in the thickness direction thereof is supported by the supporting assembly, and the other side of the flexible screen 300 in the thickness direction is used for light emission.

It may be understood that the outer side edge 560 of the side cover is a side edge of the side cover 500 facing away from a middle part of the flexible screen 300 in the axial direction of the rotating shaft mechanism 100, and the inner side edge 550 of the side cover is a side edge of the side cover 500 facing the middle part of the flexible screen 300 in the axial direction of the rotating shaft mechanism 100.

It may be understood that the outer side edge 561 of the first side cover is a side edge of the first side cover 510 facing away from the middle part of the flexible screen 300 in the axial direction of the rotating shaft mechanism 100, and the inner side edge 551 of the first side cover is a side edge of the first side cover 510 facing the middle part of the flexible screen 300 in the axial direction of the rotating shaft mechanism 100. It may be understood that the outer side edge 562 of the second side cover is a side edge of the second side cover 520 facing away from the middle part of the flexible screen 300 in the axial direction of the rotating shaft mechanism 100, and the inner side edge 552 of the second side cover is a side edge of the second side cover 520 facing the middle part of the flexible screen 300 in the axial direction of the rotating shaft mechanism 100.

It may be understood that the middle part of the flexible screen 300 refers to a middle portion of the flexible screen 300 in the axial direction of the rotating shaft mechanism 100.

In an embodiment where the first structural member 210 includes a first middle frame, the first side cover 510 may be fixedly connected to a side of the first middle frame supporting the first region 311. In an embodiment where the second structural member 220 includes a second middle frame, the second side cover 520 may be fixedly connected to a side of the second middle frame supporting the second region 312.

FIG. 6 is a schematic diagram of assembly between a first side cover and a second side cover when another foldable device is in an unfolded state according to an embodiment of this application.

As shown in FIG. 6 and referring to FIG. 3 to FIG. 5 together, in this embodiment of this application, the shielding assembly 400 may include a connecting member 410 and a shielding member 420, the connecting member 410 is fixedly connected to the end portion of the rotating shaft mechanism 100, the shielding member 420 is located on the light exit side of the flexible screen 300, and an extension direction of the shielding member 420 may be perpendicular to the axial direction of the rotating shaft mechanism 100. In the extension direction of the shielding member 420, a middle part of the shielding member 420 is fixedly connected to the connecting member 410, two ends of the shielding member 420 extend between the first side cover 510 and the first region 311 and between the second side cover 520 and the second region 312 respectively, an edge of the part of the flexible screen 300 between the first side cover 510 and the second side cover 520 is covered by the shielding member 420, and when the foldable device is in the unfolded state, the first side cover 510 and the second side cover 520 cover two ends of the shielding member 420 respectively.

It may be understood that when the foldable device is in the unfolded state, the shielding member 420 extends along the direction z perpendicular to the axial direction of the rotating shaft mechanism 100 and perpendicular to the thickness direction of the foldable device.

It may be understood that when the foldable device is switched between the folded state and the unfolded state, the two ends of the shielding member 420 may rotate with the first region 311 and the second region 312 respectively, so that the shielding member 420 can deform along with the flexible screen 300, and when the shielding member 420 deforms, the two ends of the shielding member 420 may slide between the first side cover 510 and the first region 311 and between the second side cover 520 and the second region 312 respectively, the first side cover 510 and the second side cover 520 respectively press the two ends of the shielding member 420 between the first side cover 510 and the first region 311 and between the second side cover 520 and the second region 312, and the connecting member 410, the first side cover 510, and the second side cover 520 fit each other to prevent disengagement of the shielding member 420 from the thickness direction of the foldable device.

It may be understood that the shielding member 420 may cover an edge of the bendable region 320 at one end thereof and part of the edges of the first region 311 and the second region 312.

Exemplarily, a part of the first region 311 connected to the bendable region 320 may be located outside the first side cover 510, the first side cover 510 covers part of the edge of the first region 311, and the part of the first region 311 connected to the bendable region 320 is covered by the shielding member 420. A part of the second region 312 connected to the bendable region 320 may be located outside the second side cover 520, the second side cover 520 covers part of the edge of the second region 312, and the part of the second region 312 connected to the bendable region 320 is covered by the shielding member 420. In this way, the first cover 510 and the second cover 520 affects bending of the flexible screen 300 less.

Exemplarily, a part of the bendable region 320 connected to the first region 311 may alternatively be covered by the first side cover 510. In this case, the edge of the first region 311 may be entirely covered by the first side cover 510. A part of the bendable region 320 connected to the second region 312 may alternatively be covered by the second side cover 520. In this case, the edge of the second region 312 may be entirely covered by the second side cover 520.

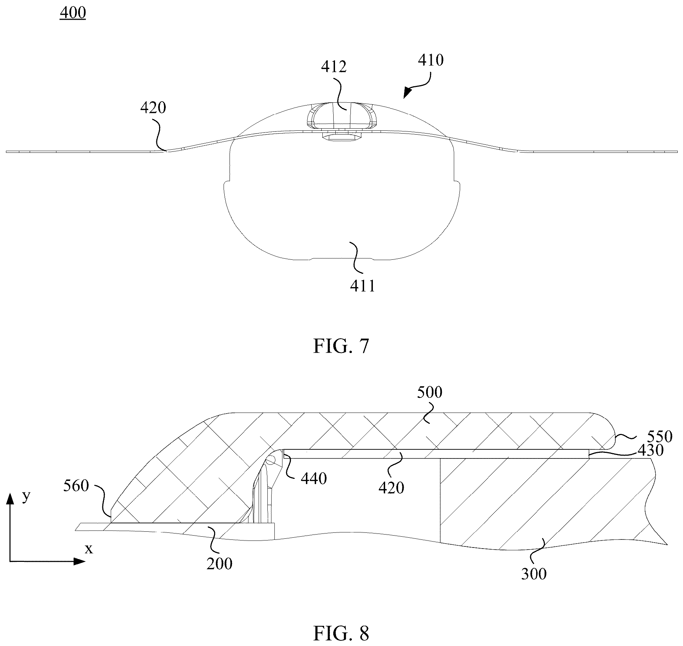

FIG. 7 is a schematic diagram of a shielding assembly of another foldable device according to an embodiment of this application.

As shown in FIG. 7 and referring to FIG. 3, FIG. 5, and FIG. 6 together, in this embodiment of this application, the connecting member 410 includes a connecting portion 411 and a fixed portion 412, one end of the connecting portion 411 is fixedly connected to the rotating shaft mechanism 100, the fixed portion 412 is fixedly connected to the other end of the connecting portion 411, the fixed portion 412 is located on the light exit side of the flexible screen 300, and in the thickness direction of the foldable device, the fixed portion 412 is spaced apart from the flexible screen 300, and the shielding member 420 is fixedly connected to the fixed portion 412.

It may be understood that in the thickness direction of the foldable device, an interval may be provided between a junction of the shielding member 420 and the fixed portion 412 and the flexible screen 300, and at least part of the shielding member 420 between the first side cover 510 and the second side cover 520 may be an arched structure in a direction facing away from the flexible screen 300. In this way, it is conducive to deformation of the junction between the shielding member 420 and the fixed portion 412 as the interval between the fixed portion 412 and the flexible screen 300 changes, so that when the foldable device is in the folded state, the flexible screen 300 is not prone to damage due to squeezing of the flexible screen 300 by the junction between the shielding member 420 and the fixed portion 412, and it is also difficult for foreign objects to enter between the shielding member 420 and the fixed portion 412.

It may be understood that the connecting portion 411 may be fixedly connected to the rotating shaft mechanism 100 by plugging, bonding, snapping, fastener connection, or the like.

It may be understood that the connecting portion 411 and the fixed portion 412 may be an integral structure. The connecting portion 411 and the fixed portion 412 may alternatively be separate mechanisms fixedly connected by bonding, clamping, welding, fastener connection, or the like.

Exemplarily, the connecting member 410 may be a metal member, and both the connecting portion 411 and the fixed portion 412 may be made of metal materials.

FIG. 8 is a schematic diagram of assembly of part of a shielding member of another foldable device between a side cover and a flexible screen according to an embodiment of this application.

As shown in FIG. 8, a projection of an outer side edge of a part of the shielding member 420 between the side cover 500 and the flexible screen 300 in the thickness direction of the foldable device is outside the flexible screen 300, and a projection of an inner side edge of the part of the shielding member 420 between the side cover 500 and the flexible screen 300 in the thickness direction of the foldable device is within the flexible screen 300.

In this way, the part of the shielding member 420 between the side cover 500 and the flexible screen 300 may alternatively cover the edge of the flexible screen 300, which helps keep the shielding member 420 covering the flexible screen 300 when the foldable device switches the state.

It may be understood that projections of an outer side edge of a part of the shielding member 420 between the first side cover 510 and the flexible screen 300 and an outer side edge of a part between the second side cover 520 and the flexible screen 300 in the thickness direction of the foldable device may be both outside the flexible screen 300, and projections of an inner side edge of the part of the shielding member 420 between the first side cover 510 and the flexible screen 300 and an inner side edge of the part between the second side cover 520 and the flexible screen 300 in the thickness direction of the foldable device may be both within the flexible screen 300.

It may be understood that an outer side edge 440 of the shielding member is a side edge of the shielding member 420 facing away from the middle part of the flexible screen 300 in the axial direction of the rotating shaft mechanism 100, and an inner side edge 430 of the shielding member is a side edge of the shielding member 420 facing the middle part of the flexible screen 300 in the axial direction of the rotating shaft mechanism 100.

In this embodiment of this application, projections of the inner side edge 430 of the shielding member in the thickness direction of the foldable device may be within the flexible screen 300, and projections of the outer side edges 440 of the shielding member in the thickness direction of the foldable device may be outside the flexible screen 300.

In this way, the shielding member 400 has a better shielding effect on the edge of the flexible screen 300. In addition, an amount of overlap between the shielding member 400 and the flexible screen 300 is large, and lag does not easily occur between the shielding member 400 and the flexible screen 300.

In the related art, when the foldable device is in the unfolded state, an inner side edge of a part of the shielding member covered by the side cover is nearly flush with the inner side edge of the side cover covering the part, the shielding member is a shielding member with a uniform thickness, and under a trend of thinness and lightness of the foldable device, the thickness of the shielding member is smaller, making the strength of the shielding member lower. When the foldable device is switched to the folded state, the shielding member may be bent. Due to the lower strength of the shielding member, two ends of the shielding member are prone to movement towards the inner side edge of the shielding member due to the deformation. In other words, the part of the shielding member covered by the side cover is prone to movement towards the inner side edge of the shielding member, so that the part of the shielding member covered by the side cover is prone to disengagement from the inner side edge of the side cover, and the part of the shielding member disengaged from the inner side edge of the side cover may affect the appearance of the whole machine. In addition, the part of the shielding member disengaged from the inner side edge of the side cover is prone to warping without the covering pressure of the side cover, and when the foldable device is unfolded to drive the shielding member to be unfolded, the part of the shielding member disengaged from the inner side edge of the side cover may move towards the outer side edge of the side cover. In this case, the warping part of the shielding member is prone to abutment against the side cover, thereby causing damage to the shielding member.

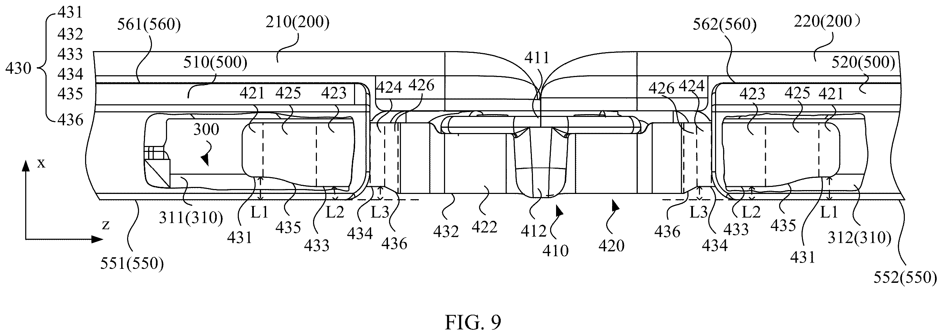

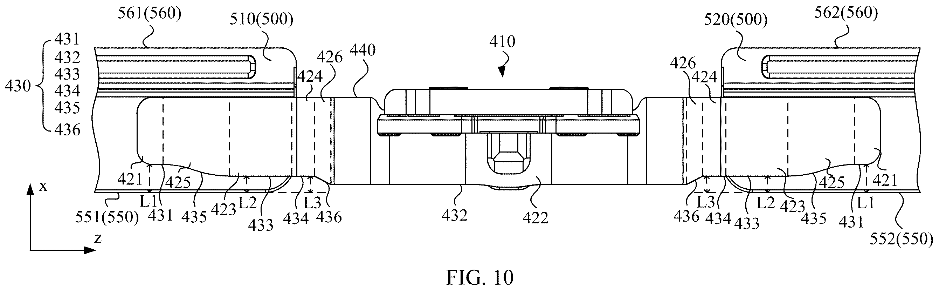

FIG. 9 is a schematic diagram of local openings in a first side cover and a second side cover when another foldable device is in an unfolded state according to an embodiment of this application. FIG. 10 is a schematic diagram of fit between a first side cover, a second side cover, and a covering assembly when another foldable device is in an unfolded state according to an embodiment of this application.

As shown in FIG. 9 and FIG. 10, based on this, in the embodiments of this application, the shielding member 420 includes a first section 421 and a second section 422 connected to each other, and the second section 422 is fixedly connected to the connecting member 410. On either of the two sides of the rotating shaft mechanism 100: the first section 421 is located between the side cover 500 and the flexible screen 300, and the side cover 500 covers the first section 421. In other words, a projection of the first section 421 in the thickness direction of the flexible screen 300 falls within a projection of the side cover 500 in the thickness direction of the flexible screen 300. When the foldable device is in the folded state, the second section is located outside the side cover 500.

It may be understood that on either of the two sides of the rotating shaft mechanism 100: in the thickness direction of the foldable device, the first section 421 is located between the side cover 500 and the flexible screen 300.

It may be understood that on either of the two sides of the rotating shaft mechanism 100: regardless of the state of the folding device, the second section 422 is located outside the side cover 500.

It may be understood that in the thickness direction of the foldable device, the second section 422 may be located between the connecting member 410 and the flexible screen 300. Specifically, the second section 422 may be located between the fixed portion 412 of the connecting member 410 and the flexible screen 300, so that the second section 422 is not prone to detachment from the connecting member 410 when the foldable device is bent. Certainly, in the thickness direction of the foldable device, the fixed portion 412 of the connecting member 410 may alternatively be located between the second section 422 and the flexible screen 300.

It may be understood that the first section 421 may be located on an end portion of the shielding member 420, the first section 421 may be directly connected to the second section 422, the shielding member 420 may further include another portion between the first section 421 and the second section 422, and the first section 421 and the second section 422 may be connected through the another portion therebetween.

In the embodiments of this application, on the side of the rotating shaft mechanism 100 connected to the first structural member 210: the end portion of the shielding member 400 has the first section 421, the first section 421 is located between the first side cover 510 and the flexible screen 300, and the first side cover 510 covers the first section 421. In other words, the projection of the first section 421 in the thickness direction of the flexible screen 300 falls within a projection of the first side cover 510 in the thickness direction of the flexible screen 300. When the foldable device is in the unfolded state, in the axial direction of the rotating shaft mechanism 100, a first interval L1 is provided between an inner side edge 431 of the first section and the inner side edge 551 of the first side cover. When the foldable device is switched between the unfolded state and the folded state, in the axial direction of the rotating shaft mechanism 100, the first interval L1 is used to allow the first section 421 to move between the inner side edge 551 of the first side cover and an outer side edge 561 of the first side cover.

In this way, on the side of the rotating shaft mechanism 100 connected to the first structural member 210, the first interval L1 is reserved between the inner side edge 431 of the first section and the inner side edge 551 of the first side cover, and the first interval L1 may allow the first section 421 to move when the shielding member 420 is bent, so that when the foldable device is switched to the folded state, the part of the shielding member 420 covered by the first side cover 510 moves towards the inner side edge 430 of the shielding member, the first section 420 is not prone to disengagement from the inner side edge 551 of the first side cover, either, and the first section 421 does not easily affect an appearance of the whole machine. In addition, since the first section 421 is not prone to disengagement from the inner side edge 551 of the first side cover, the first section 421 is not prone to warping due to release from covering pressure of the first side cover 510. When the foldable device is unfolded to restore the shielding member 420 to an unfolded state, the first section 421 may move towards the outer side edge 561 of the first side cover. During the movement of the first section 421 towards the outer side edge 561 of the first side cover, it is not easy to cause damage to the shielding member 420 caused by abutment of the first section 421 against the inner side edge 551 of the first side cover due to warping. Moreover, since the first interval L1 is reserved between the inner side edge 431 of the first section and the inner side edge 551 of the first side cover, the first section 421 may be allowed to move towards the inner side edge 430 of the shielding member by a certain distance, and when the shielding member 420 has a smaller thickness and lower strength, the first section 421 is not prone to disengagement from the inner side edge 551 of the first side cover, either. In this way, the shielding member 421 can be made thinner, and the first section 421 cannot be prone to disengagement from the inner side edge 551 of the first side cover.

It may be understood that the inner side edge 431 of the first section is a side edge of the first section 421 facing the middle part of the flexible screen 300 in the axial direction of the rotating shaft mechanism 100. In other words, the inner side edge 431 of the first section is a part of the inner side edge 430 of the shielding member located in the first section 421.

It may be understood that on the side of the rotating shaft mechanism 100 connected to the first structural member 210: regardless of the state of the foldable device, the first section 421 is covered by the first side cover 510.

It may be understood that on the side of the rotating shaft mechanism 100 connected to the first structural member 210: when the foldable device is in the folded state, the second section 422 is located outside the first side cover 510. In other words, regardless of the state of the foldable device, the second section 422 is located outside the first side cover 510.

In the embodiments of this application, on the side of the rotating shaft mechanism 100 connected to the second structural member 220: the end portion of the shielding member 420 has the first section 421, the first section 421 is located between the second side cover 520 and the flexible screen 300, and the second side cover 520 covers the first section 421. In other words, the projection of the first section 421 in the thickness direction of the flexible screen 300 falls within a projection of the second side cover 520 in the thickness direction of the flexible screen 300. When the foldable device is in the unfolded state, in the axial direction of the rotating shaft mechanism, the first interval L1 is provided between the inner side edge 431 of the first section and the inner side edge 552 of the second side cover. When the foldable device is switched between the unfolded state and the folded state, in the axial direction of the rotating shaft mechanism 100, the first interval L1 is used to allow the first section 421 to move between the inner side edge 552 of the second side cover and the outer side edge 562 of the second side cover.

In this way, on the side of the rotating shaft mechanism 100 connected to the second structural member 220, the first interval L1 is reserved between the inner side edge 431 of the first section and the inner side edge 552 of the second side cover, and the first interval L1 may allow the first section 421 to move when the shielding member 420 is bent, so that when the foldable device is switched to the folded state, the part of the shielding member 420 covered by the second side cover 520 moves towards the inner side edge 430 of the shielding member, the first section 420 is not prone to disengagement from the inner side edge 552 of the second side cover, either, and the first section 421 does not easily affect the appearance of the whole machine. In addition, since the first section 421 is not prone to disengagement from the inner side edge 552 of the second side cover, the first section 421 is not prone to warping due to release from covering pressure of the second side cover 520. When the foldable device is unfolded to restore the shielding member 420 to an unfolded state, the first section 421 may move towards the outer side edge 562 of the second side cover. During the movement of the first section 421 towards the outer side edge 562 of the second side cover, it is not easy to cause damage to the shielding member 420 caused by abutment of the first section 421 against the inner side edge 552 of the second side cover due to warping. Moreover, since the first interval L1 is reserved between the inner side edge 431 of the first section and the inner side edge 552 of the second side cover, the first section 421 may be allowed to move towards the inner side edge 430 of the shielding member by a certain distance, and when the shielding member 420 has a smaller thickness and lower strength, the first section 421 is not prone to disengagement from the inner side edge 552 of the second side cover, either. In this way, the shielding member 421 can be made thinner, and the first section 421 cannot be prone to disengagement from the inner side edge 552 of the second side cover.

It may be understood that on the side of the rotating shaft mechanism 100 connected to the second structural member 220: regardless of the state of the foldable device, the first section 421 is covered by the second side cover 520.

It may be understood that on the side of the rotating shaft mechanism 100 connected to the second structural member 220: when the foldable device is in the folded state, the second section 422 is located outside the second side cover 520. In other words, regardless of the state of the foldable device, the second section 422 is located outside the second side cover 520.

It may be understood that two ends of the second section 422 may be both provided with the first section 421. When the foldable device is in the unfolded state, the first sections 421 at the two ends of the second section 422 are respectively covered by the first side cover 510 and the second side cover 520 on the two sides of the rotating shaft mechanism 100. When the foldable device is in the folded state, the second section 422 is located outside the first side cover 510 and the second side cover 520.

It may be understood that the first sections 421 disposed at the two ends of the second section 422 may be located at two ends of the shielding member 420 respectively.

In this embodiment of this application, the shielding member 420 may be an elastic member, and the shielding member 420 may be made of one or more materials of soft rubber, polyethylene terephthalate (Polyethylene terephthalate, PET), microfiber leather (poly urethane, PU), glass fiber, and the like.

In the embodiments of this application, the second section 422 is fixedly connected to the fixed portion 412 of the connecting member 410, and the second section 422 may have a structure arched in a direction facing away from the flexible screen 300.

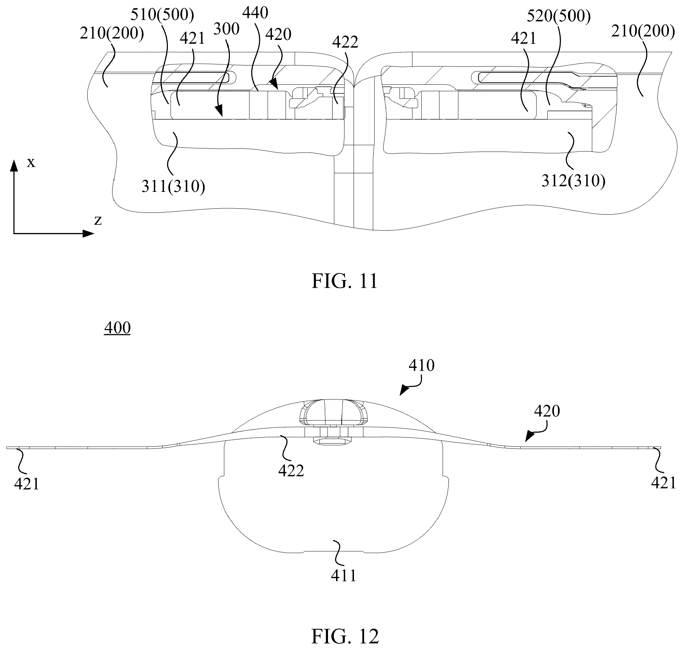

FIG. 11 is a schematic diagram of local openings on sides of a first structural member and a second structural member facing away from a flexible screen when another foldable device is in an unfolded state according to an embodiment of this application.

As shown in FIG. 11 and referring to FIG. 9, projections of the inner side edge 430 of the shielding member in the thickness direction of the foldable device are on the flexible screen 300.

In this way, a risk that the shielding member 420 is stuck into a gap between the flexible screen 300 and the side cover 500 in the axial direction of the rotating shaft mechanism 100 can be reduced, and assembly and movement of the shielding member 420 are more stable.

It may be understood that projections of the inner side edge 431 of the first section and the inner side edge 432 of the second section in the thickness direction of the foldable device are both on the flexible screen 300.

It may be understood that the inner side edge 432 of the second section is a side edge of the second section 422 facing the middle part of the flexible screen 300 in the axial direction of the rotating shaft mechanism 100. In other words, the inner side edge 432 of the second section is a part of the inner side edge 430 of the shielding member located in the second section 422.

Still referring to FIG. 9 and FIG. 10, in the embodiments of this application, when the foldable device is in the unfolded state, in the axial direction of the rotating shaft mechanism 100, the inner side edge 432 of the second section protrudes from the inner side edge 431 of the first section.

In this way, on the basis that the first section 421 is not prone to exposure, a region where the second section 422 overlaps with the flexible screen 300 can be larger, which can further improve the stability of assembly and movement of the shielding member 420. In addition, it is also conducive to increasing a width of the second section 422, is conducive to improving overall strength of the shielding member 420, and is conducive to reducing an amount of movement of the first section 421 towards the inner side edge 430 of the shielding member when the shielding member 420 is bent.

In the embodiments of this application, on either of the two sides of the rotating shaft mechanism 100: when the foldable device is in the unfolded state, in the axial direction of the rotating shaft mechanism 100, a distance between the inner side edge 431 of the first section and the outer side edge 560 of the side cover is smaller than a distance between the inner side edge 432 of the second section and the outer side edge 560 of the side cover.

In this way, on the basis that the first section 421 is not prone to exposure, it is conducive to making the region where the second section 422 overlaps with the flexible screen 300 larger, and is conducive to further improving the stability of assembly and movement of the shielding member 420. In addition, it is also conducive to increasing a width of the second section 422, is conducive to improving overall strength of the shielding member 420, and is conducive to reducing an amount of movement of the first section 421 towards the inner side edge 430 of the shielding member when the shielding member 420 is bent.

It may be understood that on the side of the rotating shaft mechanism 100 connected to the first structural member 210: when the foldable device is in the unfolded state, in the axial direction of the rotating shaft mechanism 100, a distance between the inner side edge 431 of the first section and the outer side edge 561 of the first side cover is smaller than a distance between the inner side edge 432 of the second section and the outer side edge 561 of the first side cover.

It may be understood that on the side of the rotating shaft mechanism 100 connected to the second structural member 220: when the foldable device is in the unfolded state, in the axial direction of the rotating shaft mechanism 100, a distance between the inner side edge 431 of the first section and the outer side edge 561 of the second side cover is smaller than a distance between the inner side edge 432 of the second section and the outer side edge 562 of the second side cover.

It may be understood that in the axial direction of the rotating shaft mechanism 100, the inner side edge 432 of the second section may be at a same position as at least one of the inner side edge 551 of the first side cover and the inner side edge 552 of the second side cover, the inner side edge 432 of the second section may alternatively be on outer sides of the inner side edge 551 of the first side cover and the inner side edge 552 of the second side cover, and the inner side edge 432 of the second section may alternatively be on inner sides of the inner side edge 551 of the first side cover and the inner side edge 552 of the second side cover.

In the embodiments of this application, on either of the two sides of the rotating shaft mechanism 100: the shielding member 420 further includes a third section 423 between the first section 421 and the second section 422, the third section 423 is located between the side cover 500 and the flexible screen 300, and the side cover 500 covers the third section 423. When the foldable device is in the unfolded state, in the axial direction of the rotating shaft mechanism 100, a second interval L2 is provided between an inner side edge 433 of the third section and the inner side edge 550 of the side cover. The second interval L2 is smaller than the first interval L1. When the foldable device is switched between the unfolded state and the folded state, in the axial direction of the rotating shaft mechanism 100, the second interval L2 is used to allow the third section 423 to move between the inner side edge 550 of the side cover and the outer side edge 560 of the side cover.

It may be understood that the inner side edge 433 of the third section is a side edge of the third section 423 facing the middle part of the flexible screen 300 in the axial direction of the rotating shaft mechanism 100. In other words, the inner side edge 433 of the third section is a part of the inner side edge 430 of the shielding member located in the third section 423.

It may be understood that regardless of the state of the foldable device, the third section 423 is covered by the side cover 500.

In this way, on the basis that the first section 421 is not prone to exposure, an overlapping region between another portion of the shielding member 420 covered by the side cover 500 and the flexible screen 300 may be larger, and the shielding member 420 is not easily stuck into the gap between the flexible screen 300 and the side cover 500 in the axial direction of the rotating shaft mechanism 100. In addition, the second interval L2 allowing the third section 423 to move when the shielding member 420 is bent is reserved between the inner side edge 433 of the third section and the inner side edge 550 of the side cover, so that when the foldable device is switched to the folded state to bend the shielding member 420, the part of the shielding member 420 covered by the side cover 500 moves towards the inner side edge 430 of the shielding member, and the third section 423 is not prone to disengagement from the inner side edge 550 of the side cover, either. In addition, a width of the third section 423 can be larger, which is conducive to improving overall strength of the shielding member 420, so that an amount of movement of two ends towards the inner side edge of the shielding member 420 is smaller when the shielding member 420 is bent.

It may be understood that on the side of the rotating shaft mechanism 100 connected to the first structural member 210: the shielding member 420 may include a third section 423 between the first section 421 and the second section 422, the third section 423 is located between the first side cover 510 and the flexible screen 300, and the first side cover 510 covers the third section 423. When the foldable device is in the unfolded state, in the axial direction of the rotating shaft mechanism 100, the second interval L2 is provided between an inner side edge 433 of the third section and the inner side edge 551 of the first side cover. The second interval L2 is smaller than the first interval L1. When the foldable device is switched between the unfolded state and the folded state, in the axial direction of the rotating shaft mechanism 100, the second interval L2 is used to allow the third section 423 to move between the inner side edge 551 of the first side cover and the outer side edge 561 of the first side cover.

It may be understood that on the side of the rotating shaft mechanism 100 connected to the second structural member 220: the shielding member 420 may include a third section 423 between the first section 421 and the second section 422, the third section 423 is located between the second side cover 520 and the flexible screen 300, and the second side cover 520 covers the third section 423. When the foldable device is in the unfolded state, in the axial direction of the rotating shaft mechanism 100, the second interval L2 is provided between an inner side edge 433 of the third section and the inner side edge 552 of the second side cover. The second interval L2 is smaller than the first interval L1. When the foldable device is switched between the unfolded state and the folded state, in the axial direction of the rotating shaft mechanism 100, the second interval L2 is used to allow the third section 423 to move between the inner side edge 552 of the second side cover and the outer side edge 562 of the second side cover.

In the embodiments of this application, on either of the two sides of the rotating shaft mechanism 100: when the foldable device is in the unfolded state, in the axial direction of the rotating shaft mechanism 100, the inner side edge 433 of the third section protrudes from the inner side edge 431 of the first section, and the inner side edge 432 of the second section protrudes from the inner side edge 433 of the third section.

In this way, on the basis that neither of the first section 421 and the third section 423 is prone to exposure, a region where the second section 422 and the third section 423 overlap with the flexible screen 300 can be larger, and the stability of assembly and movement of the shielding member 420 is higher. In addition, the widths of the second section 422 and the third section 423 may be larger, and the overall strength of the shielding member 420 is higher, which is conducive to reducing an amount of movement of the first section 421 and the third section 423 towards the inner side edge 430 of the shielding member when the shielding member 420 is bent.

In the embodiments of this application, on either of the two sides of the rotating shaft mechanism 100: when the foldable device is in the unfolded state, in the axial direction of the rotating shaft mechanism 100, the distance between the inner side edge 431 of the first section and the outer side edge 560 of the side cover is smaller than a distance between the inner side edge 433 of the third section and the outer side edge 560 of the side cover, and the distance between the inner side edge 432 of the third section and the outer side edge 560 of the side cover is smaller than the distance between the inner side edge 432 of the second section and the outer side edge 560 of the side cover.

In this way, on the basis that neither of the first section 421 and the third section 423 is prone to exposure, it is conducive to making the region where the second section 422 and the third section 423 overlap with the flexible screen 300 larger, and is conducive to further improving the stability of assembly and movement of the shielding member 420. In addition, it is also conducive to increasing the widths of the second section 422 and the third section 423, is conducive to improving overall strength of the shielding member 420, and is conducive to reducing an amount of movement of the first section 421 and the third section 423 towards the inner side edge 430 of the shielding member when the shielding member 420 is bent.

It may be understood that on the side of the rotating shaft mechanism 100 connected to the first structural member 210: when the foldable device is in the unfolded state, in the axial direction of the rotating shaft mechanism 100, the distance between the inner side edge 431 of the first section and the outer side edge 561 of the first side cover is smaller than a distance between the inner side edge 433 of the third section and the outer side edge 561 of the first side cover, and the distance between the inner side edge 433 of the third section and the outer side edge 561 of the first side cover is smaller than the distance between the inner side edge 432 of the second section and the outer side edge 561 of the first side cover.

It may be understood that on the side of the rotating shaft mechanism 100 connected to the second structural member 220: when the foldable device is in the unfolded state, in the axial direction of the rotating shaft mechanism 100, the distance between the inner side edge 431 of the first section and the outer side edge 561 of the second side cover is smaller than a distance between the inner side edge 433 of the third section and the outer side edge 562 of the second side cover, and the distance between the inner side edge 433 of the third section and the outer side edge 562 of the second side cover is smaller than the distance between the inner side edge 432 of the second section and the outer side edge 562 of the second side cover.

In the embodiments of this application, on either of the two sides of the rotating shaft mechanism 100: the shielding member 420 further includes a first connecting section 425 connecting the first section 421 and the third section 423, and the inner side edge 431 of the first section is transitionally connected to the inner side edge 433 of the third section through an inner side edge 435 of the first connecting section.

It may be understood that the inner side edge 435 of the first connecting section is a side edge of the first connecting section 425 facing the middle part of the flexible screen 300 in the axial direction of the rotating shaft mechanism 100. In other words, the inner side edge 435 of the first connecting section is a part of the inner side edge 430 of the shielding member located in the first connecting section 425.

In this way, the inner side edge 431 of the first section can be smoothly connected to the inner side edge 433 of the third section, so that lag does not occur due to a sudden positional conflict when the shielding member 420 slides. In addition, an amount of overlap between the first connecting section 425 and the flexible screen 300 is also larger, and the stability of assembly and movement of the shielding member 420 is higher.

It may be understood that on either of the two sides of the rotating shaft mechanism 100: one end of the inner side edge 435 of the first connecting section joins the inner side edge 431 of the first section, the other end of the inner side edge 435 of the first connecting section joins the inner side edge 433 of the third section, one end of the inner side edge 431 of the first section connected to the inner side edge 435 of the first connecting section gradually and smoothly transitions, through the inner side edge 435 of the first connecting section, to one end of the inner side edge 433 of the third section connected to the inner side edge 435 of the first connecting section, and there is no abrupt step-like structure between the inner side edge 431 of the first section and the inner side edge 433 of the third section.

It may be understood that both the inner side edge 431 of the first section and the inner side edge 433 of the third section may be perpendicular to the axial direction of the rotating shaft mechanism 100.

It may be understood that on either of the two sides of the rotating shaft mechanism 100: in the axial direction of the rotating shaft mechanism 100, a distance between the inner side edge 435 of the first connecting section and the inner side edge 550 of the side cover gradually decreases from one end connected to the first section 421 to one end connected to the third section 423. The inner side edge 435 of the first connecting section may be inclined relative to the axial direction of the rotating shaft mechanism 100. The inner side edge 435 of the first connecting section may be an inclined straight edge or an arc edge. When the inner side edge 435 of the first connecting section is the arc edge, the inner side edge 435 of the first connecting section may include a plurality of sections with different arcs.

In the embodiments of this application, on either of the two sides of the rotating shaft mechanism 100: the shielding member 420 may further include a fourth section 424 between the first section 421 and the second section 422, and in the axial direction of the rotating shaft mechanism 100, the fourth section 424 is located between the inner side edge 550 of the side cover and the outer side edge 560 of the side cover. When the foldable device is in the unfolded state, the fourth section 424 is located outside the side cover 500, and in the axial direction of the rotating shaft mechanism 100, a third interval L3 is provided between an inner side edge 434 of the fourth section and the inner side edge 550 of the side cover. The third interval L3 is smaller than the first interval L1. When the foldable device is in the folded state, at least part of the fourth section 424 is covered by the side cover 500. When the foldable device is switched between the unfolded state and the folded state, in the axial direction of the rotating shaft mechanism 100, the third interval L3 is used to allow the part of the fourth section 424 covered by the side cover 500 when the foldable device is in the folded state to move between the inner side edge 550 of the side cover and the outer side edge 560 of the side cover.

It may be understood that the inner side edge 434 of the fourth section is a side edge of the fourth section 424 facing the middle part of the flexible screen 300 in the axial direction of the rotating shaft mechanism 100. In other words, the inner side edge 434 of the fourth section is a part of the inner side edge 430 of the shielding member located in the fourth section 424.

In this way, the reserved third interval L3 can make a part of the foldable device that moves into the side cover 500 during the switching to the folded state not easily exposed from the inner side edge 550 of the side cover in the axial direction of the rotating shaft mechanism 100. In addition, an amount of overlap between the fourth section 424 and the flexible screen 300 is larger, and the shielding member 420 is not easily stuck into the gap between the flexible screen 300 and the side cover 500 in the axial direction of the rotating shaft mechanism 100. In addition, a width of the fourth section 424 can be larger, which is conducive to improving overall strength of the shielding member 420, so that an amount of movement of two ends towards the inner side edge 430 of the shielding member is smaller when the shielding member 420 is bent.

It may be understood that on the side of the rotating shaft mechanism 100 connected to the first structural member 210: the shielding member 420 may include a fourth section 424 between the first section 421 and the second section 422, and in the axial direction of the rotating shaft mechanism 100, the fourth section 424 is located between the inner side edge 551 of the first side cover and the outer side edge 561 of the first side cover. When the foldable device is in the unfolded state, the fourth section 424 is located outside the first side cover 510, and in the axial direction of the rotating shaft mechanism 100, the third interval L3 is provided between the inner side edge 434 of the fourth section and the inner side edge 551 of the first side cover. The third interval L3 is smaller than the first interval L1. When the foldable device is in the folded state, at least part of the fourth section 424 is covered by the first side cover 510. When the foldable device is switched between the unfolded state and the folded state, in the axial direction of the rotating shaft mechanism 100, the third interval L3 is used to allow the part of the fourth section 424 covered by the first side cover 510 when the foldable device is in the folded state to move between the inner side edge 551 of the first side cover and the outer side edge 561 of the first side cover.

It may be understood that on the side of the rotating shaft mechanism 100 connected to the second structural member 220: the shielding member 420 may include a fourth section 424 between the first section 421 and the second section 422, and in the axial direction of the rotating shaft mechanism 100, the fourth section 424 is located between the inner side edge 552 of the second side cover and the outer side edge 562 of the second side cover. When the foldable device is in the unfolded state, the fourth section 424 is located outside the second side cover 520, and in the axial direction of the rotating shaft mechanism 100, the third interval L3 is provided between the inner side edge 434 of the fourth section and the inner side edge 552 of the second side cover. The third interval L3 is smaller than the first interval L1. When the foldable device is in the folded state, at least part of the fourth section 424 is covered by the second side cover 520. When the foldable device is switched between the unfolded state and the folded state, in the axial direction of the rotating shaft mechanism 100, the third interval L3 is used to allow the part of the fourth section 424 covered by the second side cover 520 when the foldable device is in the folded state to move between the inner side edge 552 of the second side cover and the outer side edge 562 of the second side cover.

It may be understood that on either of the two sides of the rotating shaft mechanism 100: when the foldable device is in the folded state, the inner side edge 434 of the fourth section may be partially covered by the side cover 500 and partially located outside the side cover 500, and the inner side edge 434 of the fourth section may alternatively be entirely covered by the side cover 500.

In the embodiments of this application, on either of the two sides of the rotating shaft mechanism 100: when the foldable device is in the unfolded state, in the axial direction of the rotating shaft mechanism 100, the inner side edge 434 of the fourth section protrudes from the inner side edge 431 of the first section, and the inner side edge 432 of the second section protrudes from the inner side edge 434 of the fourth section.

In this way, a region where the second section 422 and the fourth section 424 overlap with the flexible screen 300 can be larger, and the stability of assembly and movement of the shielding member 420 is higher. In addition, the widths of the second section 422 and the fourth section 424 may be larger, and the overall strength of the shielding member 420 is higher, which is conducive to reducing an amount of movement of two ends towards the inner side edge of the shielding member 420 when the shielding member 420 is bent.

In the embodiments of this application, on either of the two sides of the rotating shaft mechanism 100: when the foldable device is in the unfolded state, in the axial direction of the rotating shaft mechanism 100, the distance between the inner side edge 431 of the first section and the outer side edge 560 of the side cover is smaller than a distance between the inner side edge 434 of the fourth section and the outer side edge 560 of the side cover, and the distance between the inner side edge 434 of the fourth section and the outer side edge 560 of the side cover is smaller than the distance between the inner side edge 432 of the second section and the outer side edge 560 of the side cover.

In this way, it is conducive to making a region where the second section 422 and the fourth section 424 overlap with the flexible screen 300 larger, and is conducive to improving the stability of assembly and movement of the shielding member 420. In addition, it is also conducive to making the widths of the second section 422 and the fourth section 424 larger and the overall strength of the shielding member 420 higher, and is conducive to reducing an amount of movement of two ends towards the inner side edge of the shielding member 420 when the shielding member 420 is bent.

It may be understood that on the side of the rotating shaft mechanism 100 connected to the first structural member 210: when the foldable device is in the unfolded state, in the axial direction of the rotating shaft mechanism 100, the distance between the inner side edge 431 of the first section and the outer side edge 561 of the first side cover is smaller than a distance between the inner side edge 434 of the fourth section and the outer side edge 561 of the first side cover, and the distance between the inner side edge 434 of the fourth section and the outer side edge 561 of the first side cover is smaller than the distance between the inner side edge 432 of the second section and the outer side edge 561 of the first side cover.

It may be understood that on the side of the rotating shaft mechanism 100 connected to the second structural member 220: when the foldable device is in the unfolded state, in the axial direction of the rotating shaft mechanism 100, the distance between the inner side edge 431 of the first section and the outer side edge 562 of the second side cover is smaller than a distance between the inner side edge 434 of the fourth section and the outer side edge 562 of the second side cover, and the distance between the inner side edge 434 of the fourth section and the outer side edge 562 of the second side cover is smaller than the distance between the inner side edge 432 of the second section and the outer side edge 562 of the second side cover.

In the embodiments of this application, on either of the two sides of the rotating shaft mechanism 100: the fourth section 424 is located between the second section 422 and the third section 423, the third section 423 joins the fourth section 424, and when the foldable device is in the unfolded state, in the axial direction of the rotating shaft mechanism 100, the inner side edge 434 of the fourth section is flush with the inner side edge 433 of the third section.

In this way, it is less difficult to manufacture the shielding member 420. In addition, a requirement for assembly accuracy of assembly of the shielding member 420 between the side cover 500 is also lower.

In the embodiments of this application, on either of the two sides of the rotating shaft mechanism 100: when the foldable device is in the unfolded state, the third interval L3 is equal to the second interval L2.

In the embodiments of this application, on either of the two sides of the rotating shaft mechanism 100: the shielding member further includes a second connecting section 426 connecting the second section 422 and the fourth section 423, and the inner side edge 432 of the second section is transitionally connected to the inner side edge 434 of the fourth section through an inner side edge 436 of the second connecting section.

It may be understood that the inner side edge 436 of the second connecting section is a side edge of the second connecting section 426 facing the middle part of the flexible screen 300 in the axial direction of the rotating shaft mechanism 100. In other words, the inner side edge 436 of the second connecting section is a part of the inner side edge 430 of the shielding member located in the second connecting section 426.

In this way, the inner side edge 432 of the second section can be smoothly connected to the inner side edge 434 of the fourth section, so that lag does not occur due to a sudden positional conflict when the shielding member 420 slides. In addition, an amount of overlap between the second connecting section 426 and the flexible screen 300 is also larger, and the stability of assembly and movement of the shielding member 420 is higher.

It may be understood that on either of the two sides of the rotating shaft mechanism 100: one end of the inner side edge 436 of the second connecting section joins the inner side edge 432 of the second section, the other end of the inner side edge 436 of the second connecting section joins the inner side edge 434 of the fourth section, one end of the inner side edge 432 of the second section connected to the inner side edge 436 of the second connecting section gradually and smoothly transitions, through the inner side edge 436 of the second connecting section, to one end of the inner side edge 434 of the fourth section connected to the inner side edge 436 of the second connecting section, and there is no abrupt step-like structure between the inner side edge 432 of the second section and the inner side edge 434 of the fourth section.

It may be understood that both the inner side edge 432 of the second section and the inner side edge 434 of the fourth section may be perpendicular to the axial direction of the rotating shaft mechanism 100.

It may be understood that on either of the two sides of the rotating shaft mechanism 100: in the axial direction of the rotating shaft mechanism 100, a distance between the inner side edge 436 of the second connecting section and the outer side edge 560 of the side cover gradually decreases from one end connected to the second section 422 to one end connected to the fourth section 424. The inner side edge 436 of the second connecting section may be inclined relative to the axial direction of the rotating shaft mechanism 100. The inner side edge 436 of the second connecting section may be an inclined straight edge or an arc edge. When the inner side edge 436 of the second connecting section is the arc edge, the inner side edge 436 of the second connecting section may include a plurality of sections with different arcs.

It may be understood that when the foldable device is in the folded state and the inner side edge 434 of the fourth section is entirely covered by the side cover 500, part of the inner side edge 436 of the second connecting section may be covered by the side cover 500.

FIG. 12 is a schematic diagram of a shielding assembly of another foldable device according to an embodiment of this application.

As shown in FIG. 12, in some embodiments of this application, a thickness of the second section 422 is greater than that of the first section 421.

In this way, the thickness of the second section 422 is larger, which may make the strength of the shielding member 420 greater, so that when the foldable device is switched to the folded state, two ends of the shielding member 420 are not prone to movement towards the inner side edge 430 of the shielding member, the part of the shielding member 420 covered by the side cover 500 when the foldable device is in the folded state is not prone to disengagement from the inner side edge 550 of the side cover, and the shielding member 420 does not easily affect the appearance of the whole machine. In addition, since the part of the shielding member 420 covered by the side cover 500 when the foldable device is in the folded state is not prone to disengagement from the inner side edge 550 of the side cover, the part of the shielding member 420 covered by the side cover 500 when the foldable device is in the folded state is not prone to warping due to release from covering pressure of the side cover 500. When the foldable device is unfolded to restore the shielding member 420 to an unfolded state, the part of the shielding member 420 covered by the side cover 500 when the foldable device is in the folded state may move towards the outer side edge 560 of the side cover. During the movement of the part of the shielding member 420 covered by the side cover 500 when the foldable device is in the folded state towards the outer side edge 560 of the side cover, it is not easy to cause damage to the shielding member 420 caused by abutment of a partial position of the shielding member 420 against the inner side edge 550 of the side cover due to warping. Moreover, after the strength of the shielding member 420 is improved by thickening a thickness of the part of the shielding member 420 configured to be connected to the connecting member 410, when the thickness of the part of the shielding member 420 covered by the side cover 500 when the foldable device is in the folded state is smaller, the part of the shielding member 420 covered by the side cover 500 when the foldable device is in the folded state is not prone to movement towards the inner side edge 430 of the shielding member, either, and the part of the shielding member 420 covered by the side cover 500 when the foldable device is in the folded state is not prone to disengagement from the inner side edge 550 of the side cover. In this way, the part of the shielding member 420 covered by the side cover 500 when the foldable device is in the folded state can be made thinner, and the part of the shielding member 420 covered by the side cover 500 when the foldable device is in the folded state cannot be prone to disengagement from the inner side edge 430 of the side cover.

It may be understood that the thickness of the part of the shielding member 420 covered by the side cover 500 when the foldable device is in the folded state may be equal, and the thickness of the part of the shielding member 420 covered by the side cover 500 when the foldable device is in the folded state may be less than the thickness of the second section 422.

It may be understood that in an embodiment where the thickness of the second section 422 is greater than that of the first section 421, on either of the two sides of the rotating shaft mechanism 100: when the foldable device is in the unfolded state, in the axial direction of the rotating shaft mechanism 100, the first interval L1 is provided between the inner side edge 431 of the first section and the inner side edge 550 of the side cover. In other words, on the side of the rotating shaft mechanism 100 connected to the first structural member 210: when the foldable device is in the unfolded state, in the axial direction of the rotating shaft mechanism 100, the first interval L1 is provided between the inner side edge 431 of the first section and the inner side edge 551 of the first side cover. On the side of the rotating shaft mechanism 100 connected to the second structural member 220: when the foldable device is in the unfolded state, in the axial direction of the rotating shaft mechanism 100, the first interval L1 is provided between the inner side edge 431 of the first section and the inner side edge 552 of the second side cover.

It may be understood that in an embodiment where the thickness of the second section 422 is greater than that of the first section 421, on either of the two sides of the rotating shaft mechanism 100: when the foldable device is in the unfolded state, in the axial direction of the rotating shaft mechanism 100, the inner side edge 431 of the first section is flush with the inner side edge 550 of the side cover. In other words, on the side of the rotating shaft mechanism 100 connected to the first structural member 210: when the foldable device is in the unfolded state, in the axial direction of the rotating shaft mechanism 100, the inner side edge 431 of the first section is flush with the inner side edge 551 of the first side cover. On the side of the rotating shaft mechanism 100 connected to the second structural member 220: when the foldable device is in the unfolded state, in the axial direction of the rotating shaft mechanism 100, the inner side edge 431 of the first section is flush with the inner side edge 552 of the second side cover.

It may be understood that in an embodiment where the thickness of the second section 422 is greater than that of the first section 421, the second section 422 may be a structure arched in a direction away from the flexible screen 300, and after the thickness of the second section 422 is increased, the thickness of the whole machine is less affected.

In an embodiment where the thickness of the second section 422 is greater than that of the first section 421, a middle part of the second section 422 is fixedly connected to the connecting member 410, and the thickness of the second section 422 gradually decreases from the middle part towards an end portion of the first section 421.

In this way, it is conducive to smooth connection between an end portion of the second section 423 and another portion of the shielding member 420, so that when the shielding member 420 slides, lag does not easily occur, and it is less likely to form a protruding structure that can easily crush the flexible screen 300.

In some embodiments of this application, the shielding member 420 has a limiting structure. On either of the two sides of the rotating shaft mechanism 100: the shielding member 420 is configured to abut against at least one of the side cover 500 and the flexible screen 300 through the limiting structure, to restrict part of the shielding member 420 covered by the side cover 500 when the foldable device is in the folded state from moving towards the inner side edge 430 of the shielding member.

In this way, the limiting structure can restrict the part of the shielding member 420 covered by the side cover 500 when the foldable device is in the folded state from moving towards the inner side edge 430 of the shielding member, so that when the foldable device is switched to the folded state, the part of the shielding member 420 covered by the side cover 500 when the foldable device is in the folded state is not prone to movement towards the inner side edge 430 of the shielding member, the part of the shielding member 420 covered by the side cover 500 when the foldable device is in the folded state is not prone to disengagement from the inner side edge 550 of the side cover, and the shielding member 420 does not easily affect the appearance of the whole machine. In addition, since the part of the shielding member 420 covered by the side cover 500 when the foldable device is in the folded state is not prone to disengagement from the inner side edge 550 of the side cover, the part of the shielding member 420 covered by the side cover 500 when the foldable device is in the folded state is not prone to warping due to release from covering pressure of the side cover 500. When the foldable device is unfolded to restore the shielding member 420 to an unfolded state, the part of the shielding member 420 covered by the side cover 500 when the foldable device is in the folded state may move towards the outer side edge 560 of the side cover. During the movement of the part of the shielding member 420 covered by the side cover 500 when the foldable device is in the folded state towards the outer side edge 560 of the side cover, it is not easy to cause damage to the shielding member 420 caused by abutment of a partial position of the shielding member 420 against the inner side edge 550 of the side cover due to warping. Moreover, due to the restriction of the limiting structure, when the shielding member 420 has a smaller thickness and lower strength, the part of the shielding member 420 covered by the side cover 500 when the foldable device is in the folded state is not prone to movement towards the inner side edge 430 of the shielding member, either, and the part of the shielding member 420 covered by the side cover 500 when the foldable device is in the folded state is not prone to disengagement from the inner side edge 550 of the side cover. In this way, the shielding member 420 can be made thinner, and the part of the shielding member 420 covered by the side cover 500 when the foldable device is in the folded state cannot be prone to disengagement from the inner side edge 550 of the side cover.

It may be understood that the shielding member 420 may abut against the side cover 500 through the limiting structure without abutting against the flexible screen 300, the shielding member 420 may alternatively abut against the flexible screen 300 through the limiting structure without abutting against the side cover 500, and the shielding member 420 may alternatively abut against both the side cover 500 and the flexible screen 300 through the limiting structure.

It may be understood that on either of the two sides of the rotating shaft mechanism 100: the limiting structure may be located at the part of the shielding member 420 covered by the side cover 500 when the foldable device is in the unfolded state, and the part of the shielding member 420 covered by the side cover 500 when the foldable device is in the unfolded state is configured to abut against at least one of the side cover 500 and the flexible screen 300 through the limiting structure, to restrict a part of the shielding member 420 covered by the side cover 500 when the foldable device is in the folded state from moving towards the inner side edge 430 of the shielding member.

It may be understood that the part of the shielding member 420 covered by the side cover 500 when the foldable device is in the unfolded state may be covered by the side cover 500 regardless of the state of the foldable device. On either of the two sides of the rotating shaft mechanism 100: the part of the shielding member 420 covered by the side cover 500 when the foldable device is in the unfolded state may include the first section 421, the third section 423, and the first connecting section 425, and the limiting structure may be located in at least one of the first section 421, the third section 423, and the first connecting section 425.

It may be understood that on the side of the rotating shaft mechanism 100 connected to the first structural member 210: the part of the shielding member 420 covered by the first side cover 510 when the foldable device is in the unfolded state has the limiting structure, and the part of the shielding member 420 covered by the first side cover 510 when the foldable device is in the unfolded state is configured to abut against at least one of the first side cover 510 and the flexible screen 300 through the limiting structure, to restrict a part of the shielding member 420 covered by the first side cover 510 when the foldable device is in the folded state from moving towards the inner side edge 430 of the shielding member.

It may be understood that on the side of the rotating shaft mechanism 100 connected to the second structural member 220: the part of the shielding member 420 covered by the second side cover 520 when the foldable device is in the unfolded state has the limiting structure, and the part of the shielding member 420 covered by the second side cover 520 when the foldable device is in the unfolded state is configured to abut against at least one of the second side cover 520 and the flexible screen 300 through the limiting structure, to restrict a part of the shielding member 420 covered by the second side cover 520 when the foldable device is in the folded state from moving towards the inner side edge 430 of the shielding member.

It may be understood that in an embodiment where the shielding member 420 has the limiting structure, on either of the two sides of the rotating shaft mechanism 100: when the foldable device is in the unfolded state, in the axial direction of the rotating shaft mechanism 100, the first interval L1 is provided between the inner side edge 431 of the first section and the inner side edge 550 of the side cover. In other words, on the side of the rotating shaft mechanism 100 connected to the first structural member 210: when the foldable device is in the unfolded state, in the axial direction of the rotating shaft mechanism 100, the first interval L1 is provided between the inner side edge 431 of the first section and the inner side edge 551 of the first side cover. On the side of the rotating shaft mechanism 100 connected to the second structural member 220: when the foldable device is in the unfolded state, in the axial direction of the rotating shaft mechanism 100, the first interval L1 is provided between the inner side edge 431 of the first section and the inner side edge 552 of the second side cover.

It may be understood that in an embodiment where the shielding member 420 has the limiting structure, on either of the two sides of the rotating shaft mechanism 100: when the foldable device is in the unfolded state, in the axial direction of the rotating shaft mechanism 100, the inner side edge 431 of the first section is flush with the inner side edge 550 of the side cover. In other words, on the side of the rotating shaft mechanism 100 connected to the first structural member 210: when the foldable device is in the unfolded state, in the axial direction of the rotating shaft mechanism 100, the inner side edge 431 of the first section is flush with the inner side edge 551 of the first side cover. On the side of the rotating shaft mechanism 100 connected to the second structural member 220: when the foldable device is in the unfolded state, in the axial direction of the rotating shaft mechanism 100, the inner side edge 431 of the first section is flush with the inner side edge 552 of the second side cover.

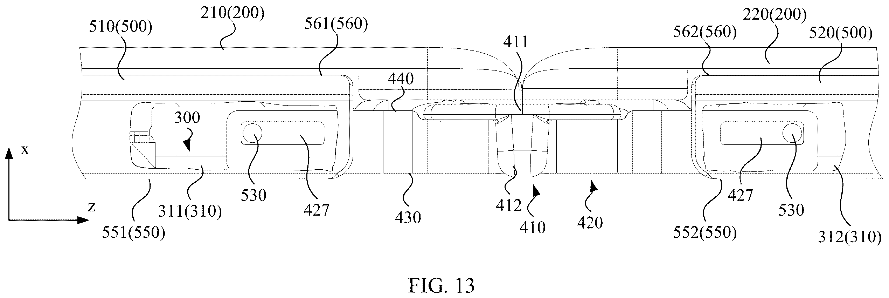

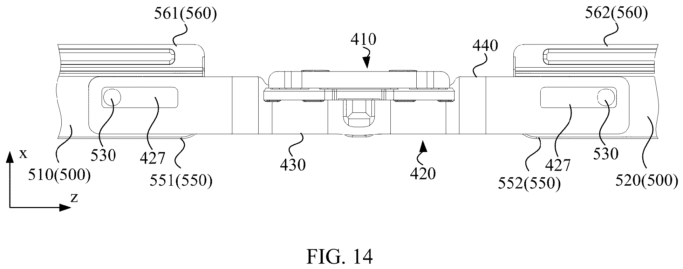

FIG. 13 is a schematic diagram of local openings in a first side cover and a second side cover when another foldable device is in an unfolded state according to an embodiment of this application. FIG. 14 is a schematic diagram of fit between a first side cover, a second side cover, and a covering assembly when another foldable device is in an unfolded state according to an embodiment of this application.

As shown in FIG. 13 and FIG. 14, in the embodiments of this application, on either of the two sides of the rotating shaft mechanism 100: the limiting structure includes a limiting hole 427 provided on a side of the shielding member 420 facing away from the flexible screen 300, the side cover 500 has a limiting post 530 protruding towards a light-emitting surface of the flexible screen 300, the limiting post 530 is disposed through the limiting hole 427, and a hole wall of the limiting hole 427 is configured to abut against the limiting post 530 to restrict the part of the shielding member 420 covered by the side cover 500 from moving towards the inner side edge 430 of the shielding member.

In this way, through fit between the limiting post 530 and the limiting hole 427, the part of the shielding member 420 covered by the side cover 500 when the foldable device is in the folded state can be restricted from moving towards the inner side edge 430 of the shielding member, the structure is simpler, and the assembly is more convenient.

It may be understood that on the side of the rotating shaft mechanism 100 connected to the first structural member 210: the first side cover 510 has a limiting post 530 protruding towards a light-emitting surface of the flexible screen 300, the limiting post 530 is disposed through the limiting hole 427, and the hole wall of the limiting hole 427 is configured to abut against the limiting post 530 to restrict the part of the shielding member 420 covered by the first side cover 510 from moving towards the inner side edge 430 of the shielding member.

It may be understood that on the side of the rotating shaft mechanism 100 connected to the second structural member 220: the second side cover 520 has a limiting post 530 protruding towards a light-emitting surface of the flexible screen 300, the limiting post 530 is disposed through the limiting hole 427, and the hole wall of the limiting hole 427 is configured to abut against the limiting post 530 to restrict the part of the shielding member 420 covered by the second side cover 520 from moving towards the inner side edge 430 of the shielding member.

It may be understood that the limiting post 530 may be a cylinder, a square column, a prism, or the like.

It may be understood that the limiting hole 427 may be a round hole, a square hole, a strip hole, or the like, and a gap is provided between the limiting hole 427 and the limiting post 530 disposed therethrough.

In the embodiments of this application, the limiting hole 427 is a strip-shaped hole, and when the foldable device is in the unfolded state, an extension direction of the limiting hole 427 is perpendicular to the axial direction of the rotating shaft mechanism 100. On either of the two sides of the rotating shaft mechanism 100: the limiting post 530 is in sliding fit with the limiting hole 427, and the limiting post 530 is slidable relative to the shielding member 420 along the extension direction of the limiting hole 427.

In this way, the shielding member 420 can slide between the side cover 500 and the flexible screen 300, and when the foldable device is switched between the unfolded state and the folded state, the limiting post 530 cannot easily pull the shielding member 420.

It may be understood that in an embodiment where the limiting post 530 and the limiting hole 427 fit to restrict the part of the shielding member 420 covered by the side cover 500 when the foldable device is in the folded state from moving towards the inner side edge of the shielding member 420, on either of the two sides of the rotating shaft mechanism 100: when the foldable device is in the unfolded state, in the axial direction of the rotating shaft mechanism 100, the inner side edge 431 of the first section may be flush with the inner side edge 550 of the side cover. In other words, on the side of the rotating shaft mechanism 100 connected to the first structural member 210: when the foldable device is in the unfolded state, in the axial direction of the rotating shaft mechanism 100, the inner side edge 431 of the first section is flush with the inner side edge 551 of the first side cover. On the side of the rotating shaft mechanism 100 connected to the second structural member 220: when the foldable device is in the unfolded state, in the axial direction of the rotating shaft mechanism 100, the inner side edge 431 of the first section is flush with the inner side edge 552 of the second side cover.

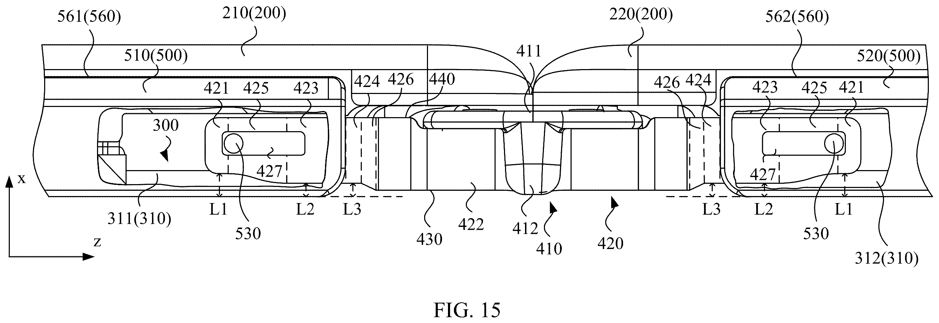

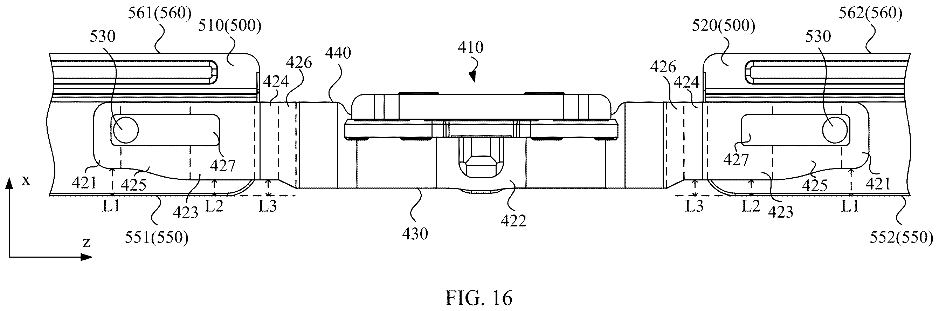

FIG. 15 is a schematic diagram of local openings in a first side cover and a second side cover when another foldable device is in an unfolded state according to an embodiment of this application. FIG. 16 is a schematic diagram of fit between a first side cover, a second side cover, and a covering assembly when another foldable device is in an unfolded state according to an embodiment of this application.

As shown in FIG. 15 and FIG. 16, it may be understood that in an embodiment where the limiting post 530 and the limiting hole 427 fit to restrict the part of the shielding member 420 covered by the side cover 500 when the foldable device is in the folded state from moving towards the inner side edge of the shielding member 420, on either of the two sides of the rotating shaft mechanism 100: alternatively, when the foldable device is in the unfolded state, in the axial direction of the rotating shaft mechanism 100, the first interval L1 may be provided between the inner side edge 431 of the first section and the inner side edge 550 of the side cover. In other words, on the side of the rotating shaft mechanism 100 connected to the first structural member 210: when the foldable device is in the unfolded state, in the axial direction of the rotating shaft mechanism 100, the first interval L1 is provided between the inner side edge 431 of the first section and the inner side edge 551 of the first side cover. On the side of the rotating shaft mechanism 100 connected to the second structural member 220: when the foldable device is in the unfolded state, in the axial direction of the rotating shaft mechanism 100, the first interval L1 is provided between the inner side edge 431 of the first section and the inner side edge 552 of the second side cover.

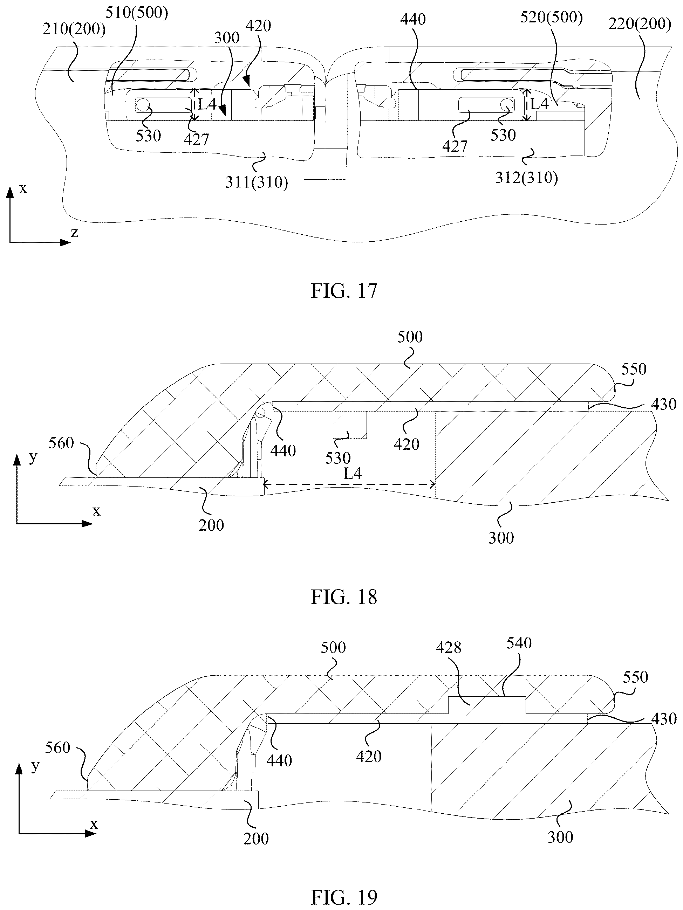

FIG. 17 is a schematic diagram of local openings on sides of a first structural member and a second structural member facing away from a flexible screen when another foldable device is in an unfolded state according to an embodiment of this application. FIG. 18 is a schematic diagram of assembly of part of a shielding member of another foldable device between a side cover and a flexible screen according to an embodiment of this application.

As shown in FIG. 17 and FIG. 18 and referring to FIG. 13 and FIG. 15, in the embodiments of this application, the limiting hole 427 is a through hole. On either of the two sides of the rotating shaft mechanism 100: in the axial direction of the rotating shaft mechanism 100, a fourth interval 14 is provided between the flexible screen 300 and the structural member 200, and the limiting post 530 is located within the fourth interval L4.

In this way, the limiting post 530 can pass through the limiting hole 427, which is conducive to stable abutment of the limiting post 530 against the hole wall of the limiting hole 427, and the limiting post 530 is not prone to disengagement from the limiting hole 427. In addition, the limiting post 530 is located within the fourth interval L4, which can reduce an influence of the limiting post 530 on the thickness of the entire machine.

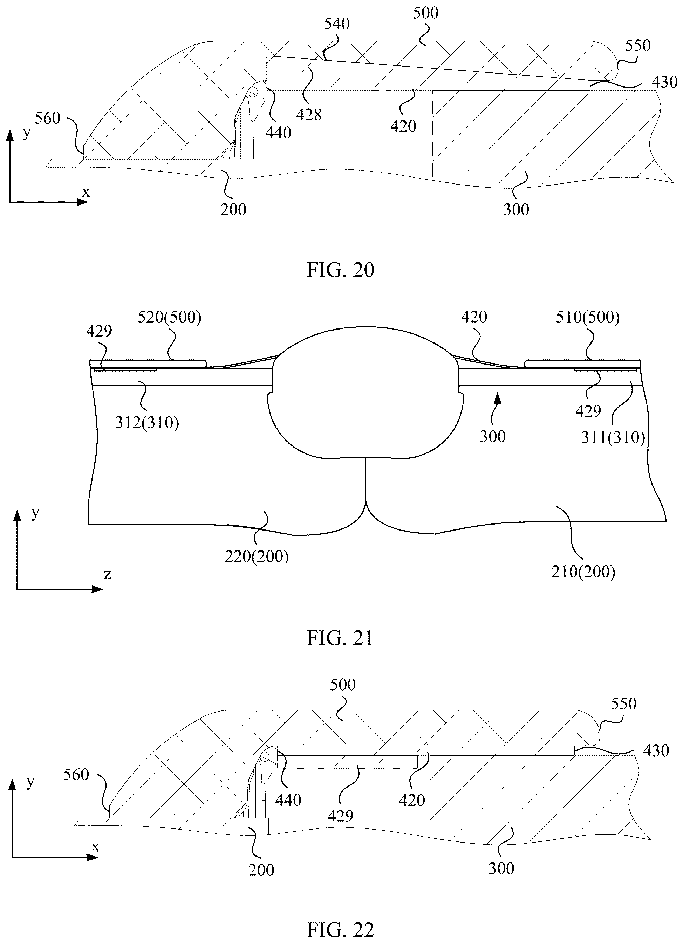

FIG. 19 is a schematic diagram of assembly of part of a shielding member of another foldable device between a side cover and a flexible screen according to an embodiment of this application. FIG. 20 is a schematic diagram of assembly of part of a shielding member of another foldable device between a side cover and a flexible screen according to an embodiment of this application.

As shown in FIG. 19 and FIG. 20, in the embodiments of this application, on either of the two sides of the rotating shaft mechanism 100: the limiting structure includes a first protruding portion 428 located on the side of the shielding member 420 facing away from the flexible screen 300, and the first protruding portion 428 is configured to abut against the side cover 500 to restrict the part of the shielding member 420 covered by the side cover 500 when the foldable device is in the folded state from moving towards the inner side edge 430 of the shielding member.

In this way, through fit between the first protruding portion 428 and the side cover 500, the part of the shielding member 420 covered by the side cover 500 when the foldable device is in the folded state can be restricted from moving towards the inner side edge 430 of the shielding member, the structure is simpler, and the assembly is more convenient.

It may be understood that on the side of the rotating shaft mechanism 100 connected to the first structural member 210: the first protruding portion 428 is configured to abut against the first side cover 510 to restrict the part of the shielding member 420 covered by the first side cover 510 when the foldable device is in the folded state from moving towards the inner side edge 430 of the shielding member. On the side of the rotating shaft mechanism 100 connected to the second structural member 220: the first protruding portion 428 is configured to abut against the second side cover 520 to restrict the part of the shielding member 420 covered by the second side cover 520 when the foldable device is in the folded state from moving towards the inner side edge 430 of the shielding member.

It may be understood that the first protruding portion 428 may be various structures such as a table-shaped structure, a block-shaped structure, a columnar structure, or an arc-shaped structure.

It may be understood that the first protruding portion 428 may be an integral structure with the shielding member 420. In this case, the part of the shielding member 420 covered by the side cover 500 is not a structure with a uniform thickness. The first protruding portion 428 may alternatively be attached to a surface on a side of the shielding member 420 facing away from the flexible screen 300.

In the embodiments of this application, a side of the side cover 500 facing the light-emitting surface of the flexible screen 300 is provided with a sliding groove 540, and an extension direction of the sliding groove 540 is perpendicular to the axial direction of the rotating shaft mechanism 100. On either of the two sides of the rotating shaft mechanism 100: the first protruding portion 428 is slidably assembled in the sliding groove 540, the first protruding portion 428 is slidable relative to the side cover 500 along the extension direction of the sliding groove 540, and the first protruding portion 428 is configured to abut against a groove wall of the sliding groove 540 to restrict the part of the shielding member 420 covered by the side cover 500 when the foldable device is in the folded state from moving towards the inner side edge 430 of the shielding member.

In this way, through fit between the first protruding portion 428 and the sliding groove 540, the part of the shielding member 420 covered by the side cover 500 when the foldable device is in the folded state can be restricted from moving towards the inner side edge 430 of the shielding member, and the abutment between the first protruding portion 428 and the side cover 500 is more stable. In addition, it is conducive to sliding of the shielding member 420 between the flexible screen 300 and the side cover 500, and the side cover 500 is not likely to squeeze the first protruding portion 428.

It may be understood that on the side of the rotating shaft mechanism 100 connected to the first structural member 210: a side of the first side cover 510 facing the light-emitting surface of the flexible screen 300 is provided with the sliding groove 540, the first protruding portion 428 is slidable relative to the first side cover 510 along the extension direction of the sliding groove 540, and the first protruding portion 428 is configured to abut against a groove wall of the sliding groove 540 to restrict the part of the shielding member 420 covered by the first side cover 510 when the foldable device is in the folded state from moving towards the inner side edge 430 of the shielding member.

It may be understood that on the side of the rotating shaft mechanism 100 connected to the second structural member 220: a side of the second side cover 520 facing the light-emitting surface of the flexible screen 300 is provided with the sliding groove 540, the first protruding portion 428 is slidable relative to the second side cover 520 along the extension direction of the sliding groove 540, and the first protruding portion 428 is configured to abut against a groove wall of the sliding groove 540 to restrict the part of the shielding member 420 covered by the second side cover 520 when the foldable device is in the folded state from moving towards the inner side edge 430 of the shielding member.

Exemplarily, a side of the first protruding portion 428 facing away from the flexible screen 300 may be an inclined surface inclined to the flexible screen 300, and when the foldable device is in the folded state, a cross section of the part of the shielding member 420 covered by the side cover 500 may be in a wedge shape with a thick outer side and a thin inner side.

In the embodiments of this application, on either of the two sides of the rotating shaft mechanism 100: the sliding groove 540 may pass through an end of the side cover 500 facing the rotating shaft mechanism 100 along a direction perpendicular to the axial direction of the rotating shaft mechanism 100.

In this way, assembly of the shielding member 420 and the side cover 500 is facilitated.

It may be understood that the shielding member 420 may entirely be a wedge-shaped structure with a thick outer side and a thin inner side.

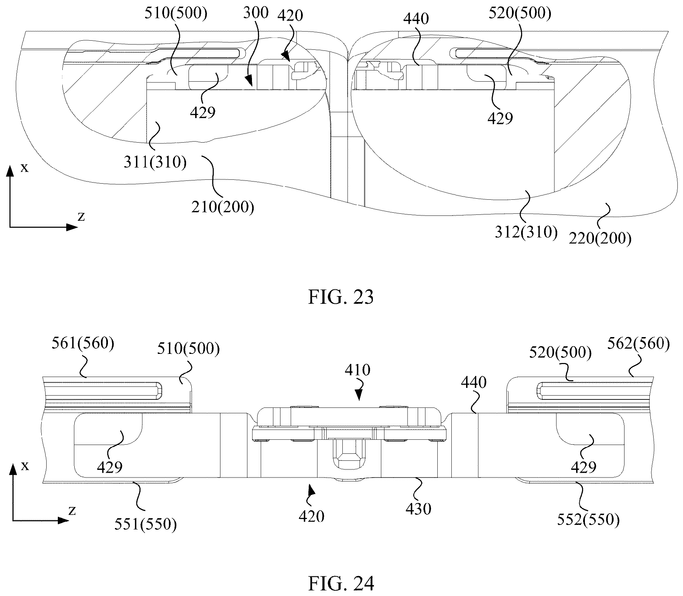

FIG. 21 is a schematic diagram of a shielding assembly on a rotating shaft mechanism between a first structural member and a second structural member when another foldable device is in an unfolded state according to an embodiment of this application. FIG. 22 is a schematic diagram of assembly of part of a shielding member of another foldable device between a side cover and a flexible screen according to an embodiment of this application. FIG. 23 is a schematic diagram of local openings on sides of a first structural member and a second structural member facing away from a flexible screen when another foldable device is in an unfolded state according to an embodiment of this application. FIG. 24 is a schematic diagram of fit among a first side cover, a second side cover, and a covering assembly when another foldable device is in an unfolded state according to an embodiment of this application.

As shown in FIG. 21 to FIG. 24, in the embodiments of this application, on either of the two sides of the rotating shaft mechanism 100: the limiting structure includes a second protruding portion 429 located on the side of the shielding member 420 facing away from the flexible screen 300, in the axial direction of the rotating shaft mechanism 100, the second protruding portion 429 is located between the flexible screen 300 and the side cover 500, and the second protruding portion 429 is configured to abut against the flexible screen 300 to restrict the part of the shielding member 420 covered by the side cover 500 when the foldable device is in the folded state from moving towards the inner side edge 430 of the shielding member.

In this way, through fit between the second protruding portion 429 and the flexible screen 300, the part of the shielding member 420 covered by the side cover 500 when the foldable device is in the folded state can be restricted from moving towards the inner side edge 430 of the shielding member, the structure is simpler, and the assembly is more convenient. In addition, the second protruding portion 429 affects the thickness of the whole machine less.

It may be understood that the second protruding portion 429 may be an integral structure with the shielding member 420. In this case, the part of the shielding member 420 covered by the first side cover 500 is not a structure with a uniform thickness. The second protruding portion 429 may alternatively be attached to a surface on a side of the shielding member 420 facing the flexible screen 300.

It may be understood that on the side of the rotating shaft mechanism 100 connected to the first structural member 210: in the axial direction of the rotating shaft mechanism 100, the second protruding portion 429 is located between the flexible screen 300 and the first side cover 510, and the second protruding portion 429 is configured to abut against the flexible screen 300 to restrict the part of the shielding member 420 covered by the first side cover 510 when the foldable device is in the folded state from moving towards the inner side edge 430 of the shielding member.

It may be understood that on the side of the rotating shaft mechanism 100 connected to the second structural member 220: in the axial direction of the rotating shaft mechanism 100, the second protruding portion 429 is located between the flexible screen 300 and the second side cover 520, and the second protruding portion 429 is configured to abut against the flexible screen 300 to restrict the part of the shielding member 420 covered by the second side cover 520 when the foldable device is in the folded state from moving towards the inner side edge 430 of the shielding member.

It may be understood that in an embodiment where the second protruding portion 429 and the flexible screen 300 fit to restrict the part of the shielding member 420 covered by the side cover 500 when the foldable device is in the folded state from moving towards the inner side edge 430 of the shielding member, on either of the two sides of the rotating shaft mechanism 100: when the foldable device is in the unfolded state, in the axial direction of the rotating shaft mechanism 100, the inner side edge 431 of the first section may be flush with the inner side edge 550 of the side cover. In other words, on the side of the rotating shaft mechanism 100 connected to the first structural member 210: when the foldable device is in the unfolded state, in the axial direction of the rotating shaft mechanism 100, the inner side edge 431 of the first section is flush with the inner side edge 551 of the first side cover. On the side of the rotating shaft mechanism 100 connected to the second structural member 220: when the foldable device is in the unfolded state, in the axial direction of the rotating shaft mechanism 100, the inner side edge 431 of the first section is flush with the inner side edge 552 of the second side cover.

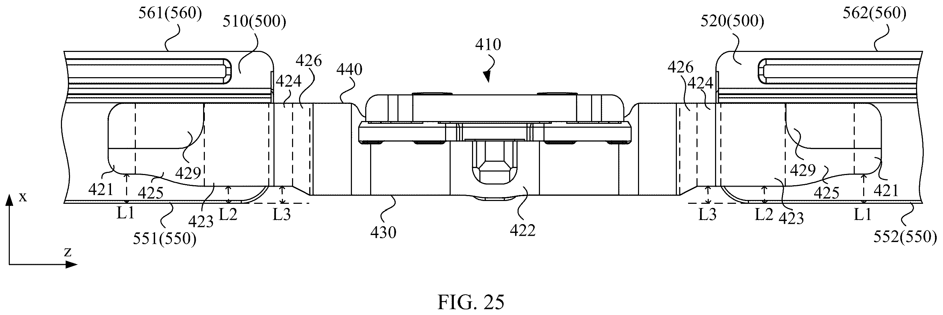

FIG. 25 is a schematic diagram of fit between a first side cover, a second side cover, and a covering assembly when another foldable device is in an unfolded state according to an embodiment of this application.

As shown in FIG. 25, in an embodiment where the second protruding portion 429 and the flexible screen 300 fit to restrict the part of the shielding member 420 covered by the side cover 500 when the foldable device is in the folded state from moving towards the inner side edge 430 of the shielding member, on either of the two sides of the rotating shaft mechanism 100: alternatively, when the foldable device is in the unfolded state, in the axial direction of the rotating shaft mechanism 100, the first interval L1 may be provided between the inner side edge 431 of the first section and the inner side edge 550 of the side cover. In other words, on the side of the rotating shaft mechanism 100 connected to the first structural member 210: when the foldable device is in the unfolded state, in the axial direction of the rotating shaft mechanism 100, the first interval L1 is provided between the inner side edge 431 of the first section and the inner side edge 551 of the first side cover. On the side of the rotating shaft mechanism 100 connected to the second structural member 220: when the foldable device is in the unfolded state, in the axial direction of the rotating shaft mechanism 100, the first interval L1 is provided between the inner side edge 431 of the first section and the inner side edge 552 of the second side cover.

In the descriptions of the embodiments of this application, it should be noted that, unless otherwise explicitly specified and defined, the terms such as "install", "join", and "connect" should be understood in a broad sense, which may be, for example, a fixed connection, an indirect connection through an intermediary, internal communication between two components, or interaction between two components. A person of ordinary skill in the art may understand the specific meanings of the foregoing terms in this application according to specific situations.

The terms such as "first", "second", "third", and "fourth" (if any) in the specification of the embodiments of this application, the claims, and the accompanying drawings are used for distinguishing similar objects and not necessarily used for describing any particular order or sequence.

Finally, it should be noted that: the foregoing embodiments are merely used for describing the technical solutions of the embodiments of this application, instead of limiting the embodiments of this application. Although the embodiments of this application are described in detail with reference to the above embodiments, a person of ordinary skill in the art should understand that modifications may still be made to the technical solutions described in the foregoing embodiments, or equivalent replacements may be made to some or all of the technical features; and these modifications or replacements do not cause the essence of corresponding technical solutions to depart from the scope of the technical solutions in the embodiments of this application.

## Claims

1. A foldable device, comprising a structural member, a rotating shaft mechanism, a flexible screen, a side cover, and a shielding assembly, wherein
the structural member is rotationally connected to the rotating shaft mechanism, and the flexible screen is disposed on surfaces of the structural member and the rotating shaft mechanism;
an edge of the structural member is provided with the side cover, the flexible screen is located between the side cover and the structural member, and the side cover covers part of an edge of the flexible screen;
an end portion of the rotating shaft mechanism is provided with the shielding assembly, the shielding assembly comprises a connecting member and a shielding member, the connecting member is fixedly connected to the end portion of the rotating shaft mechanism, and the shielding member is located on a light exit side of the flexible screen;
the shielding member comprises a first section and a second section connected to each other, the first section is located between the side cover and the flexible screen, the side cover covers the first section, and the second section is fixedly connected to the connecting member;
when the foldable device is in an unfolded state, in an axial direction of the rotating shaft mechanism, a first interval is provided between an inner side edge of the first section and an inner side edge of the side cover; and
when the foldable device is switched between the unfolded state and a folded state, in the axial direction of the rotating shaft mechanism, the first interval is used to allow the first section to move between the inner side edge of the side cover and an outer side edge of the side cover, wherein
the outer side edge of the side cover is a side edge of the side cover facing away from a middle part of the flexible screen in the axial direction of the rotating shaft mechanism, the inner side edge of the side cover is a side edge of the side cover facing the middle part of the flexible screen in the axial direction of the rotating shaft mechanism, and the inner side edge of the first section is a side edge of the first section facing the middle part of the flexible screen in the axial direction of the rotating shaft mechanism.

2. The foldable device according to claim 1, wherein two sides of the rotating shaft mechanism are rotationally connected to structural members, the flexible screen is disposed on surfaces of the rotating shaft mechanism and the two structural members, an edge of either of the structural members is provided with the side cover, and two ends of the second section are both provided with the first section; and
on either of the two sides of the rotating shaft mechanism:
the flexible screen is located between the side cover and the structural member, the side cover covers part of the edge of the flexible screen, the first section is located between the side cover and the flexible screen, and the side cover covers the first section;
when the foldable device is in the unfolded state, in the axial direction of the rotating shaft mechanism, the first interval is provided between the inner side edge of the first section and the inner side edge of the side cover; and
when the foldable device is switched between the unfolded state and the folded state, in the axial direction of the rotating shaft mechanism, the first interval is used to allow the first section to move between the inner side edge of the side cover and the outer side edge of the side cover.

3. The foldable device according to claim 2, wherein when the foldable device is in the unfolded state, in the axial direction of the rotating shaft mechanism, an inner side edge of the second section protrudes from the inner side edge of the first section, wherein
the inner side edge of the second section is a side edge of the second section facing the middle part of the flexible screen in the axial direction of the rotating shaft mechanism.

4. The foldable device according to claim 2 or 3, wherein on either of the two sides of the rotating shaft mechanism:
the shielding member further comprises a third section between the first section and the second section, the third section is located between the side cover and the flexible screen, and the side cover covers the third section;
when the foldable device is in the unfolded state, in the axial direction of the rotating shaft mechanism, a second interval is provided between an inner side edge of the third section and the inner side edge of the side cover, and the second interval is smaller than the first interval; and
when the foldable device is switched between the unfolded state and the folded state, in the axial direction of the rotating shaft mechanism, the second interval is used to allow the third section to move between the inner side edge of the side cover and the outer side edge of the side cover, wherein
the inner side edge of the third section is a side edge of the third section facing the middle part of the flexible screen in the axial direction of the rotating shaft mechanism.

5. The foldable device according to claim 4, wherein when the foldable device is in the unfolded state, in the axial direction of the rotating shaft mechanism, the inner side edge of the third section protrudes from the inner side edge of the first section, and the inner side edge of the second section protrudes from the inner side edge of the third section.

6. The foldable device according to claim 4 or 5, wherein on either of the two sides of the rotating shaft mechanism:
the shielding member further comprises a first connecting section connecting the first section and the third section, and the inner side edge of the first section is transitionally connected to the inner side edge of the third section through an inner side edge of the first connecting section, wherein
the inner side edge of the first connecting section is a side edge of the first connecting section facing the middle part of the flexible screen in the axial direction of the rotating shaft mechanism.

7. The foldable device according to any one of claims 4 to 6, wherein on either of the two sides of the rotating shaft mechanism:
the shielding member further comprises a fourth section between the first section and the second section, and in the axial direction of the rotating shaft mechanism, the fourth section is located between the inner side edge of the side cover and the outer side edge of the side cover;
when the foldable device is in the unfolded state, the fourth section is located outside the side cover, in the axial direction of the rotating shaft mechanism, a third interval is provided between an inner side edge of the fourth section and the inner side edge of the side cover, and the third interval is smaller than the first interval;
when the foldable device is in the folded state, at least part of the fourth section is covered by the side cover; and
when the foldable device is switched between the unfolded state and the folded state, in the axial direction of the rotating shaft mechanism, the third interval is used to allow the part of the fourth section covered by the side cover when the foldable device is in the folded state to move between the inner side edge of the side cover and the outer side edge of the side cover, wherein
the inner side edge of the fourth section is a side edge of the fourth section facing the middle part of the flexible screen in the axial direction of the rotating shaft mechanism.

8. The foldable device according to claim 7, wherein when the foldable device is in the unfolded state, in the axial direction of the rotating shaft mechanism, the inner side edge of the fourth section protrudes from the inner side edge of the first section, and the inner side edge of the second section protrudes from the inner side edge of the fourth section.

9. The foldable device according to claim 7 or 8, wherein on either of the two sides of the rotating shaft mechanism:
the fourth section is located between the second section and the third section, and the third section joins the fourth section; and
when the foldable device is in the unfolded state, in the axial direction of the rotating shaft mechanism, the inner side edge of the fourth section is flush with the inner side edge of the third section.

10. The foldable device according to any one of claims 7 to 9, wherein on either of the two sides of the rotating shaft mechanism:
the shielding member further comprises a second connecting section connecting the second section and the fourth section, and the inner side edge of the second section is transitionally connected to the inner side edge of the fourth section through an inner side edge of the second connecting section, wherein
the inner side edge of the second connecting section is a side edge of the second connecting section facing the middle part of the flexible screen in the axial direction of the rotating shaft mechanism.

11. The foldable device according to any one of claims 2 to 10, wherein the shielding member has a limiting structure; and
on either of the two sides of the rotating shaft mechanism:
the shielding member is configured to abut against at least one of the side cover and the flexible screen through the limiting structure, to restrict part of the shielding member covered by the side cover when the foldable device is in the folded state from moving towards an inner side edge of the shielding member, wherein
the inner side edge of the shielding member is a side edge of the shielding member facing the middle part of the flexible screen in the axial direction of the rotating shaft mechanism.

12. The foldable device according to claim 11, wherein on either of the two sides of the rotating shaft mechanism:
the limiting structure comprises a limiting hole provided on a side of the shielding member facing away from the flexible screen, and the side cover has a limiting post protruding towards a light-emitting surface of the flexible screen, the limiting post is disposed through the limiting hole, and a hole wall of the limiting hole is configured to abut against the limiting post to restrict the part of the shielding member covered by the side cover when the foldable device is in the folded state from moving towards the inner side edge of the shielding member.

13. The foldable device according to claim 12, wherein the limiting hole is a strip-shaped hole, and when the foldable device is in the unfolded state, an extension direction of the limiting hole is perpendicular to the axial direction of the rotating shaft mechanism; and
on either of the two sides of the rotating shaft mechanism:
the limiting post is in sliding fit with the limiting hole, and the limiting post is slidable relative to the shielding member along the extension direction of the limiting hole.

14. The foldable device according to claim 12 or 13, wherein the limiting hole is a through hole; and
on either of the two sides of the rotating shaft mechanism:
in the axial direction of the rotating shaft mechanism, a fourth interval is provided between the flexible screen and the structural member, and the limiting post is located within the fourth interval.

15. The foldable device according to any one of claims 11 to 14, wherein on either of the two sides of the rotating shaft mechanism:
the limiting structure comprises a first protruding portion located on the side of the shielding member facing away from the flexible screen, and the first protruding portion is configured to abut against the side cover to restrict the part of the shielding member covered by the side cover when the foldable device is in the folded state from moving towards the inner side edge of the shielding member.

16. The foldable device according to claim 15, wherein a side of the side cover facing the light-emitting surface of the flexible screen is provided with a sliding groove, and an extension direction of the sliding groove is perpendicular to the axial direction of the rotating shaft mechanism; and
on either of the two sides of the rotating shaft mechanism:
the first protruding portion is slidably assembled in the sliding groove, the first protruding portion is slidable relative to the side cover along the extension direction of the sliding groove, and the first protruding portion is configured to abut against a groove wall of the sliding groove to restrict the part of the shielding member covered by the side cover when the foldable device is in the folded state from moving towards the inner side edge of the shielding member.

17. The foldable device according to any one of claims 11 to 16, wherein on either of the two sides of the rotating shaft mechanism:
the limiting structure comprises a second protruding portion located on a side of the shielding member facing the flexible screen; and
in the axial direction of the rotating shaft mechanism, the second protruding portion is located between the flexible screen and the side cover, and the second protruding portion is configured to abut against the flexible screen to restrict the part of the shielding member covered by the side cover when the foldable device is in the folded state from moving towards the inner side edge of the shielding member.

18. The foldable device according to any one of claims 2 to 17, wherein a thickness of the second section is greater than that of the first section.

19. The foldable device according to claim 18, wherein a middle part of the second section is fixedly connected to the connecting member, and the thickness of the second section gradually decreases from the middle part towards an end portion of the first section.

20. A foldable device, comprising a structural member, a rotating shaft mechanism, a flexible screen, a side cover, and a shielding assembly, wherein
the structural member is rotationally connected to the rotating shaft mechanism, and the flexible screen is disposed on surfaces of the structural member and the rotating shaft mechanism;
an edge of the structural member is provided with the side cover, the flexible screen is located between the side cover and the structural member, and the side cover covers part of an edge of the flexible screen;
an end portion of the rotating shaft mechanism is provided with the shielding assembly, the shielding assembly comprises a connecting member and a shielding member, the connecting member is fixedly connected to the end portion of the rotating shaft mechanism, and the shielding member is located on a light exit side of the flexible screen;
the shielding member comprises a first section and a second section connected to each other, the first section is located between the side cover and the flexible screen, the side cover covers the first section, and the second section is fixedly connected to the connecting member; and
the shielding member has a limiting structure, and the shielding member is configured to abut against at least one of the side cover and the flexible screen through the limiting structure, to restrict part of the shielding member covered by the side cover when the foldable device is in a folded state from moving towards an inner side edge of the shielding member, wherein
the inner side edge of the shielding member is a side edge of the shielding member facing a middle part of the flexible screen in an axial direction of the rotating shaft mechanism.

21. A foldable device, comprising a structural member, a rotating shaft mechanism, a flexible screen, a side cover, and a shielding assembly, wherein
the structural member is rotationally connected to the rotating shaft mechanism, and the flexible screen is disposed on surfaces of the structural member and the rotating shaft mechanism;
an edge of the structural member is provided with the side cover, the flexible screen is located between the side cover and the structural member, and the side cover covers part of an edge of the flexible screen;
an end portion of the rotating shaft mechanism is provided with the shielding assembly, the shielding assembly comprises a connecting member and a shielding member, the connecting member is fixedly connected to the end portion of the rotating shaft mechanism, and the shielding member is located on a light exit side of the flexible screen;
the shielding member comprises a first section and a second section connected to each other, the first section is located between the side cover and the flexible screen, the side cover covers the first section, and the second section is fixedly connected to the connecting member; and
a thickness of the second section is greater than that of the first section.
